# EUROPEAN PATENT SPECIFICATION

(11) **EP 1 041 122 B1**
(45) Date of publication and mention of the grant of the patent: **06.05.2004**
(21) Application number: 00810235.2
(22) Date of filing: 21.03.2000
(51) Int. Cl.: C09B 62/45, C09B 62/453, C09B 62/085, C09B 62/09

(54) **Reactive dyes, process for their preparation and their use**
Reaktivfarbstoffe, Verfahren zu deren Herstellung und deren Verwendung
Colorants réactifs, procédé pour leur Préparation et leur utilisation

(30) Priority: 30.03.1999 EP 99810271
(43) Date of publication of application: 04.10.2000
(73) Proprietor: Ciba Specialty Chemicals Holding Inc., 4057 Basel (CH)
(72) Inventor: Tzikas, Athanassios, 4133 Pratteln (CH); Deitz, Rolf, 79639 Grenzach-Wyhlen (DE)

(56) References cited:
- EP-A- 0 486 176
- EP-A- 0 679 696
- WO-A-97/27249
- PATENT ABSTRACTS OF JAPAN vol. 007, no. 289 (C-202), 23 December 1983 (1983-12-23) & JP 58 168660 A (SUMITOMO KAGAKU KOGYO KK), 5 October 1983 (1983-10-05)
- DATABASE WPI Week 8245 Derwent Publications Ltd., London, GB; AN 82-96633E[45] XP002114180 "Dyeing cellullose fibre" & JP 57 161175 A (SUMITOMO CHEMICAL CO. LTD.), 4 October 1982 (1982-10-04) & JP 57 161175 A 4 October 1982 (1982-10-04)

## Description

The present invention relates to novel reactive dyes, to processes for their preparation and to their use for dyeing or printing fibre materials.

The practice of dyeing with reactive dyes has given rise in recent times to more stringent demands being made on the quality of the dyeings and on the economy of the dyeing process. For this reason, there is still a need for novel reactive dyes with improved properties, especially application properties.

EP-A-0 486 176, EP-A-0 679 696, JP-A-58 168 660 and JP-A-57 161 175 describe reactive azo dyes containing halotriazinyl groups and pyridone coupling components.

Dyeing today calls for reactive dyes which have sufficient substantivity and which at the same time have good washing off properties with respect to unfixed dye. In addition, the dyes shall have a good tinctorial yield and high reactivity, and they shall also give, in particular, dyeings with high degrees of fixation. The dyes of the prior art do not meet these requirements in all respects.

This invention therefore has for its object to provide novel improved reactive dyes for dyeing and printing fibre materials and which have the above specified qualities to a high degree. The novel dyes shall be distinguished in particular by excellent fixation yields and superior fibre-dye bond stability, and further they shall have the property of being easily washed off to remove unfixed dye. They shall also produce dyeings with good allround fastness properties, for example lightfastness and wetfastness.

It has been found that this object is substantially achieved with the novel reactive dyes defined below.

This invention thus relates to reactive dyes of formula (1) 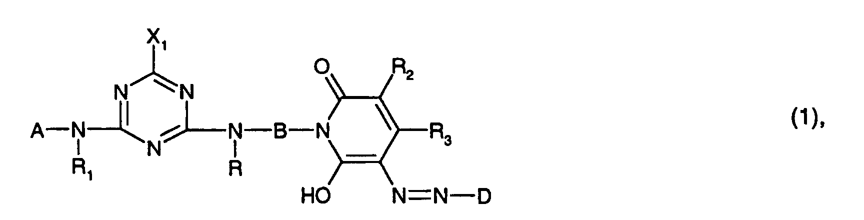 wherein
A is phenyl or naphthyl, each of which is unsubstituted or substituted by halogen, C₁-C₄alkyl, C₁-C₄alkoxy, carboxy, sulfo or a fibre-reactive group of formula (2a), (2b), (2c), (2d) or (2e)

   -SO₂-Y (2a),

   -NH-CO-(CH₂)ₗ-SO₂-Y (2b),

   -CONH-(CH₂)ₘ-SO₂-Y (2c),

   -NH-CO-CH(Hal)-CH₂Hal (2d)

   or

   -NH-CO-C(Hal)=CH₂ (2e),
B is an aliphatic linking group,
D is the radical of a diazo component of the benzene or naphthalene series,
R₁ is hydrogen or unsubstituted or substituted C₁-C₄alkyl,
R₂ is hydrogen, cyano, carbamoyl or sulfomethyl,
R₃ is hydrogen or C₁-C₄alkyl,
R corresponds to a radical of formula (3) 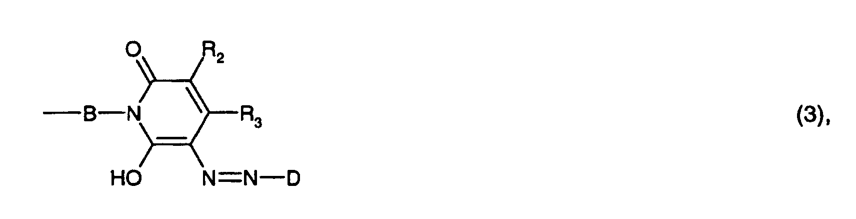 wherein B, D, R₂ and R₃ have the meanings cited above,
X₁ is halogen, hydroxy, C₁-C₄alkoxy, unsubstituted or substituted C₁-C₄alkylthio or amino, or a N-heterocycle which may contain additional heteroatoms,
Hal is chloro or bromo,
Y is vinyl or a -CH₂-CH₂-U radical, U is a group a which is removable with alkali, and l and m are each independently of the other the number 2, 3 or 4.

The novel dyes of formula (1) are fibre-reactive. Fibre-reactive compounds are to be understood as meaning compounds which are capable of reacting with the hydroxyl groups of the cellulose, amino, carboxy, hydroxy or thiol groups in wool and silk, or with the amino and, optionally, with the carboxy groups of synthetic polyamides with formation of covalent chemical bonds.

In the novel reactive dyes of formula (1) at least one of the radicals A and D contains a fibre-reactive group, or X₁ is halogen.

The dyes of formula (1) contain at least one, preferably 2 to 6 and, more preferably, 2 to 4, sulfo groups, which are either in the form of their free acid or, preferably, in the form of their salts. Suitable salts are, for example, the alkali metal salts, alkaline earth metal salts or ammonium salts, the salts of an organic amine, or mixtures thereof. Examples to be mentioned are the sodium, lithium, potassium or ammonium salts, the salt of mono-, di- or triethanolamine, or Na/Li- or Na/Li/NH₄ mixed salts.

R₁ defined as unsubstituted or substituted C₁-C₄alkyl may be methyl, ethyl, n- or iso-propyl or n-, sec-, tert- or isobutyl which is unsubstituted or substituted e.g. by hydroxy, sulfo, sulfato, carboxy, cyano, halogen, C₁-C₄alkoxycarbonyl or carbamoyl, preferably by hydroxy, sulfo, sulfato or carboxy.

R₁ is preferably hydrogen or C₁-C₄alkyl, particularly preferably hydrogen, methyl or ethyl and, very particularly preferably, hydrogen.

R₂ is preferably carbamoyl or sulfomethyl, more preferably carbamoyl.

R₃ defined as C₁-C₄alkyl is, for example, methyl, ethyl, n- or isopropyl or n-, sec-, tert- or isobutyl, preferably methyl or ethyl.

R₃ is preferably methyl or ethyl, more preferably methyl.

R₂ is preferably carbamoyl or sulfomethyl, more preferably carbamoyl, and
R₃ is C₁-C₄alkyl, more preferably methyl.

The aliphatic linking group B is, for example, straight-chain or branched C₂-C₁₂alkylene which is unsubstituted or substituted by hydroxy, C₁-C₄alkoxy, sulfato or sulfo and/or interrupted once or several times by -O- or -NR₄- , wherein R₄ is hydrogen or C₁-C₄alkyl, preferably hydrogen, methyl or ethyl, particularly preferably hydrogen. B is preferably straight-chain or branched C₂-C₆alkylene which is unsubstituted or substituted by hydroxy, sulfo or sulfato and, particularly preferably, unsubstituted straight-chain or branched C₂-C₆alkylene. Examples of particularly preferred linking groups B are 1,2-ethylene, 1,3-propylene, 2-hydroxy-1,3-propylene, 1,4-butylene, 2-methyl-1,5-pentylene, 1,6-hexylene, particularly preferably 1,2-propylene and 1,2-ethylene and, very particularly preferably, 1,2-ethylene.

X₁ defined as halogen is e.g. fluoro, chloro or bromo.

X₁ defined as C₁-C₄alkoxy is suitably, for example, methoxy, ethoxy, n-propoxy, isopropoxy, n-butoxy or isobutoxy, preferably methoxy or ethoxy and, particularly preferably, methoxy.

X₁ defined as C₁-C₄alkylthio is, for example, methylthio, ethylthio, n-propylthio, isopropylthio or n-butylthio, preferably ethylthio or n-propylthio. The cited radicals are unsubstituted or substituted in the alkyl moiety by hydroxy, carboxy or sulfo. The substituted radicals are preferred.

X₁ defined as unsubstituted or substituted amino is amino which is unsubstituted or substituted at the N-atom, for example the following radicals:
N-mono- or N,N-di-C₁-C₄alkylamino, which encompasses both the unsubstituted radicals and the radicals which are substituted in the alkyl moiety, for example by C₁-C₄alkoxy, hydroxy, carboxy, sulfo or sulfato; the radicals substituted in the alkyl moiety being preferred;
C₅-C₇cycloalkylamino, which encompasses both the unsubstituted radicals and the radicals which are substituted in the cycloalkyl ring, for example by C₁-C₄alkyl, preferably methyl; of such radicals the corresponding cyclohexyl radicals are preferred;
phenylamino or N-C₁-C₄alkyl-N-phenylamino, which encompasses both the unsubstituted radicals and the radicals which are substituted in the phenyl ring, for example by C₁-C₄alkyl, C₁-C₄alkoxy, halogen, carboxy or sulfo; these radicals are preferably unsubstituted or sulfo-substituted in the phenyl ring.

X₁ defined as a N-heterocycle which may contain further heteroatoms is suitably, for example, morpholino or piperidin-1-yl.

X₁ is preferably fluoro or chloro.

The group U which may be removed with alkali is suitably, for example, -Cl, -Br, -F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂. U is preferably a group of formula -Cl, -OSO₃H, -SSO₃H, -OCO-CH₃, -OCO-C₆H₅ or -OPO₃H₂, more preferably -Cl or -OSO₃H and, particularly preferably -OSO₃H.

Examples of suitable radicals Y are correspondingly vinyl, β-bromo- or β-chloroethyl, β-acetoxyethyl, β-benzoyloxyethyl, β-phosphatoethyl, β-sulfatoethyl and β-thiosulfatoethyl. Y is preferably vinyl, β-chloroethyl or β-sulfatoethyl and, more preferably vinyl or β-sulfatoethyl.

Hal is preferably bromo.

I and m are each independently of the other preferably the number 2 or 3.

Particularly preferably, I is the number 3 and m is the number 2.

Substituents which are customary in dyes are suitable for D. The following examples may be mentioned: C₁-C₄alkyl, meaning methyl, ethyl, n- or isopropyl, n-, iso-, sec- or tert-butyl; C₁-C₄alkoxy, meaning methoxy, ethoxy, n- or isopropoxy or n-, iso-, sec- or tert-butoxy; hydroxy-C₁-C₄alkoxy; phenoxy; C₂-C₆alkanoylamino which is unsubstituted or substituted in the alkyl moiety by hydroxy or C₁-C₄alkoxy, for example acetylamino, hydroxyacetylamino, methoxyacetylamino or propionylamino; benzoylamino which is unsubstituted or substituted in the phenyl moiety by hydroxy, sulfo, halogen, C₁-C₄alkyl or C₁-C₄alkoxy; C₁-C₆alkoxycarbonylamino which is unsubstituted or substituted in the alkyl moiety by hydroxy, C₁-C₄alkyl or C₁-C₄alkoxy; phenoxycarbonylamino which is unsubstituted or substituted in the phenyl moiety by hydroxy, C₁-C₄alkyl or C₁-C₄alkoxy; amino; N-C₁-C₄alkyl- or N,N-di-C₁-C₄alkylamino which unsubstituted or substituted in the alkyl moiety by hydroxy, C₁-C₄alkoxy, carboxy, cyano, halogen, sulfo, sulfato, phenyl or sulfophenyl, for example methylamino, ethylamino, N,N-dimethylamino, N,N-diethylamino, β-cyanoethylamino, β-hydroxyethylamino, N,N-di-β-hydroxyethylamino, β-sulfoethylamino, γ-sulfo-n-propylamino, β-sulfatoethylamino, N-(3-sulfobenzyl)amino, N-ethyl-N-(3-sulfobenzyl)amino, N-(β-sulfoethyl)-N-benzylamino; cyclohexylamino; N-phenylamino or N-C₁-C₄alkyl-N-phenylamino which is unsubstituted or substituted in the phenyl moiety by nitro, C₁-C₄alkyl, C₁-C₄alkoxy, carboxy, halogen or sulfo; C₁-C₄alkoxycarbonyl, e.g. methoxy- or ethoxycarbonyl; trifluoromethyl; nitro; cyano; halogen, generally meaning e.g. fluoro, bromo or, preferably, chloro; ureido; hydroxy; carboxy; sulfo; sulfomethyl; carbamoyl; N-C₁-C₄alkylcarbamoyl, such as N-methylcarbamoyl or N-ethylcarbamoyl; carbamido; sulfamoyl; N-C₁-C₄alkylsulfamoyl, such as N-methylsulfamoyl or N-ethylsulfamoyl; N-phenylsulfamoyl or N-C₁-C₄alkyl-N-phenylsulfamoyl which is unsubstituted or substituted in the phenyl moiety by sulfo or carboxy; C₁-C₄alkylsulfonyl, such as methyl- or ethylsulfonyl.

Suitable substituents for D are also fibre-reactive radicals.

Fibre-reactive radicals for D are, for example, the radicals of formula (2a), (2b), (2c), (2d) or (2e), wherein Y, Hal, l and m have the meanings and preferred meanings cited above, or (2f) or (2g) 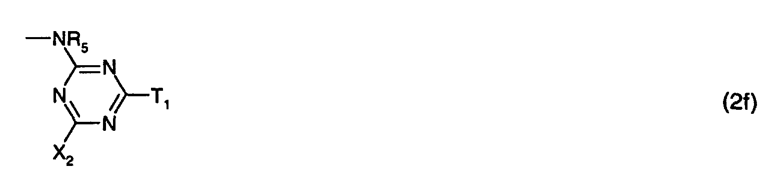 or 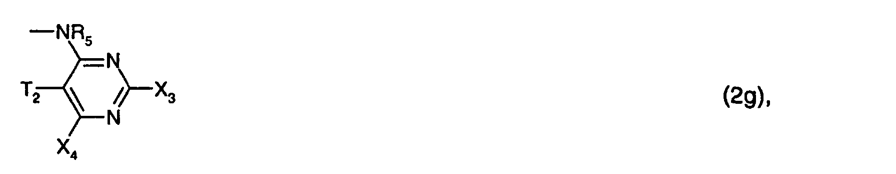 wherein
X₂ is halogen, 3-carboxypyridin-1-yl or 3-carbamoylpyridin-1-yl;
T₁ has each independently of one another the meaning of X₂, a substituent which is not fibre-reactive or a fibre-reactive radical of formula (4a), (4b), (4c), (4d) or (4e)

   -NH-(CH₂)₂₋₃-SO₂Y (4a),

   -NH-(CH₂)₂₋₃-O-(CH₂)₂₋₃-SO₂Y (4b),

   -NH-arylene-SO₂-Y (4c),

   -NH-arylene-CO-NH-(CH₂)₂₋₃-SO₂-Y (4d)

   or

   -NH-arylene-NH-CO-Y₁ (4e),
wherein
R₅ is hydrogen or C₁-C₄alkyl,
arylene is a phenylene or naphthylene radical which is unsubstituted or substituted by sulfo, carboxy, C₁-C₄alkyl, C₁-C₄alkoxy or halogen,
T₂ is hydrogen, cyano or halogen,
X₃ is halogen or C₁-C₄alkylsulfonyl,
X₄ is halogen or C₁-C₄alkyl,
Y has the meanings and preferred meanings cited above,
Y₁ is a group -CH(Hal)-CH₂Hal or -C(Hal)=CH₂, and Hal has the meanings and preferred meanings cited above.

R₅ defined as C₁-C₄alkyl is, for example, methyl, ethyl, n- or isopropyl, n-, iso- or tert-butyl.

R₅ is preferably hydrogen, methyl or ethyl and, particularly preferably, hydrogen.

T₁ defined as a non-reactive substituent may be, for example, hydroxy; C₁-C₄alkoxy; C₁-C₄₋ alkylthio which is unsubstituted or substituted by hydroxy, carboxy or sulfo; amino; amino which is mono- or disubstituted by C₁-C₈alkyl, wherein the alkyl may be further substituted e.g. by sulfo, sulfato, hydroxy, carboxy or phenyl, preferably by sulfo or hydroxy and may be interrupted by an -O- radical; cyclohexylamino; morpholino; N-C₁-C₄alkyl-N-phenylamino or phenylamino or naphthylamino, wherein phenyl or naphthyl is unsubstituted or substituted by e.g. C₁-C₄alkyl, C₁-C₄alkoxy, carboxy, sulfo or halogen.
Examples of suitable non-reactive substituents T₁ are amino, methylamino, ethylamino, β-hydroxyethylamino, N,N-di-β-hydroxyethylamino, β-sulfoethylamino, cyclohexylamino, morpholino, 2-, 3- or 4-chlorophenylamino, 2-, 3- or 4-methylphenylamino, 2-, 3- or 4-methoxyphenylamino, 2-, 3- or 4-sulfophenylamino, disulfophenylamino, 2-, 3- or 4-carboxyphenylamino, 1- or 2-naphthylamino, 1-sulfo-2-naphthylamino, 4,8-disulfo-2-naphthylamino, N-ethyl-N-phenylamino, N-methyl-N-phenylamino, methoxy, ethoxy, n- or isopropoxy and hydroxy.

As a radical which is not fibre-reactive, T₁ is preferably C₁-C₄alkoxy; C₁-C₄alkylthio which is unsubstituted or substituted by hydroxy, carboxy or sulfo; hydroxy, amino; N-mono- or N,N-di-C₁-C₄alkylamino which is unsubstituted or substituted in the alkyl moiety by hydroxy, sulfato or sulfo; morpholino; phenylamino or N-C₁-C₄alkyl-N-phenylamino which is unsubstituted or substituted in the phenyl ring by sulfo, carboxy, acetylamino, chloro, methyl or methoxy, wherein the alkyl is unsubstituted or substituted by hydroxy, sulfo or sulfato, or naphthylamino which is unsubstituted or substituted by 1 to 3 sulfo groups.

Particularly preferred radicals T₁ which are not fibre-reactive are amino, N-methylamino, N-ethylamino, N-β-hydroxyethylamino, N-methyl-N-β-hydroxyethylamino, N-ethyl-N-β-hydroxyethylamino, N,N-di-β-hydroxyethylamino, morpholino, 2-, 3- or 4-carboxyphenylamino, 2-, 3- or 4-sulfophenylamino or N-C₁-C₄alkyl-N-phenylamino.

X₂ defined as halogen is, for example, fluoro, chloro or bromo and, preferably, chloro or fluoro.

Arylene is preferably a phenylene radical, particularly preferably a 1,3- or 1,4-phenylene radical which is unsubstituted or substituted e.g. by sulfo, methyl or methoxy.

T₂, X₃ and X₄ defined as halogen are, for example, fluoro, chloro or bromo, preferably chloro or fluoro.

X₃ defined as C₁-C₄alkylsulfonyl is, for example, ethylsulfonyl or methylsulfonyl, preferably methylsulfonyl.

X₄ defined as C₁-C₄alkyl is, for example, methyl , ethyl, n- or isopropyl, n-, iso- or tert-butyl, preferably methyl.
X₃ and X₄ are preferably each independently of the other chloro or fluoro.

T₂ is preferably cyano or chloro.

In the case of the radicals of formulae (4a) and (4b), Y is preferably β-chloroethyl. In the case of the radicals of formulae (4c) and (4d), Y is preferably vinyl or β-sulfatoethyl.

Suitable fibre-reactive radicals D are preferably radicals of formula (2a), (2b), (2c), (2d), (2e), (2f) or (2g), wherein Y is vinyl, β-chloroethyl or β-sulfatoethyl, Hal is bromo, I and m are each independently of the other the number 2 or 3, R₅ is hydrogen, and X₂, X₃ and X₄ are each independently of one another chloro or fluoro, T₁ is a fibre-reactive radical of formula (4c') or (4d'), 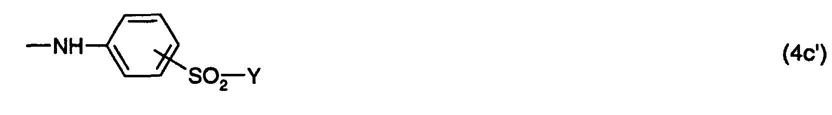 or 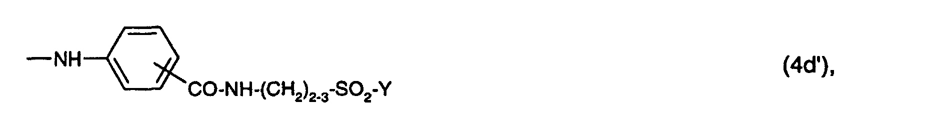 preferably (4c'), wherein Y is vinyl or β-sulfatoethyl, and T₂ is cyano or chloro.

Those novel reactive dyes are preferred, wherein at least one of the radicals A and D contains a fibre-reactive group.

D is preferably a phenyl or naphthyl radical which may be further substituted by substituents customarily used for dyes, preferably by C₁-C₄alkyl, C₁-C₄alkoxy, halogen, sulfo, nitro, carboxy or a fibre-reactive radical of formula (2a), (2b), (2c), (2d), (2e), (2f) or (2g), the above meanings and preferred meanings applying to the cited fibre-reactive radicals.

If D carries one or more than one non-reactive substituent, then it is preferably sulfo, C₁-C₄₋ alkyl, C₁-C₄alkoxy or halogen and, particularly preferably, sulfo, methyl or methoxy.

D defined as a radical of an unsubstituted or substituted diazo component of the benzene or naphthalene series also encompasses monoazo radicals, for example those of formula (5) or (6)

-D*-N=N-K* (5)

or

D*-N=N-K**- (6),

preferably of formula (6), wherein D* is the radical of a diazo component of the benzene or naphthalene series, K* is the radical of a coupling component of the benzene, naphthalene, pyrazolone, 6-hydroxypyridone-(2) or acetoacetic acid arylamide series, and K** is the radical of a coupling component of the benzene or naphthalene series, it being possible for D*, K* and K** to carry substituents customarily used in dyes.

Suitable substituents for D*, K* and K** which are not fibre-reactive are preferably C₁-C₄alkyl or C₁-C₄alkoxy which may be further substituted by hydroxy, C₁-C₄alkoxy, sulfo or sulfato; halogen, carboxy, sulfo, nitro, cyano, trifluoromethyl, sulfamoyl, carbamoyl, amino, ureido, hydroxy, sulfomethyl, C₂-C₄alkanoylamino, C₁-C₄alkylsulfonylamino; benzoylamino which is unsubstituted or substituted in the phenyl ring by C₁-C₄alkyl, C₁-C₄alkoxy, halogen or sulfo, or phenyl which is unsubstituted or substituted by C₁-C₄alkyl, C₁-C₄alkoxy, halogen, carboxy or sulfo.

Suitable fibre-reactive substituents for D*, K* and K** are preferably the radicals of formula (2a), (2c), (2d), (2e) or (2f), preferably (2a), the above meanings and preferred meanings applying to the cited radicals.

The monoazo radicals of formula (5) or (6) preferably contain at least one sulfo group.

Preferred monoazo radicals D of formula (6) correspond to the radicals of formula (6a), (6b), (6c), (6d), (6e), (6f), (6g), (6h), (6i) or (6j) 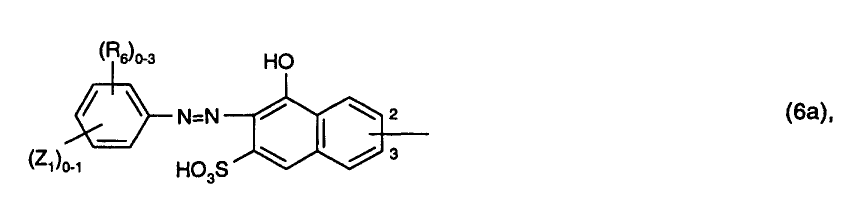 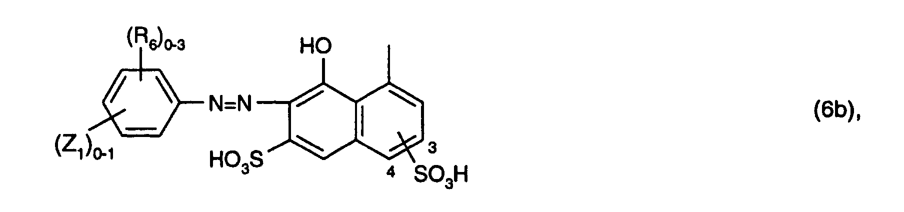 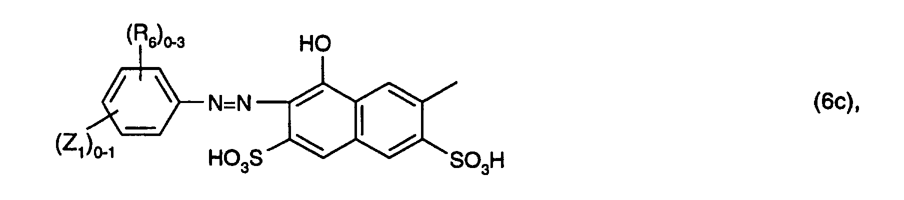 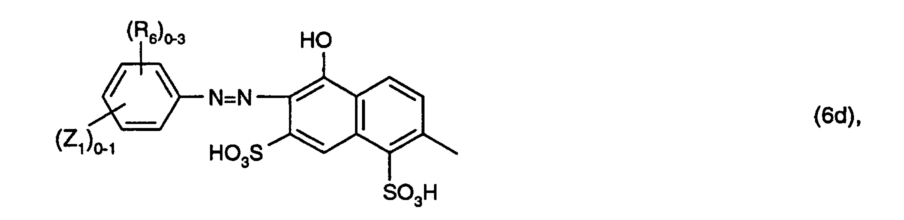 wherein (R₆)₀₋₃ is 0 to 3 identical or different substituents from the C₁-C₄alkyl, C₁-C₄alkoxy, halogen, carboxy and sulfo group, and Z₁ is a fibre-reactive radical of formula (2a), (2c), (2d), (2e) or (2f), preferably (2a), (2c), (2d) or (2e), particularly preferably (2a), the above meanings and preferred meanings applying to the cited fibre-reactive radicals, 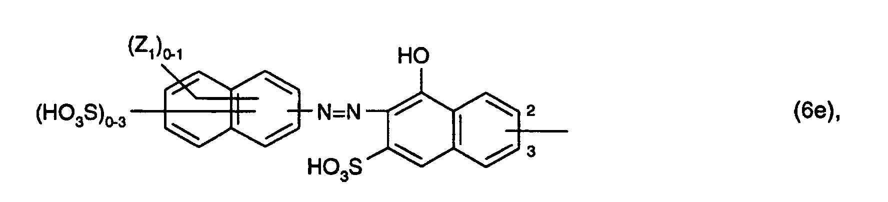 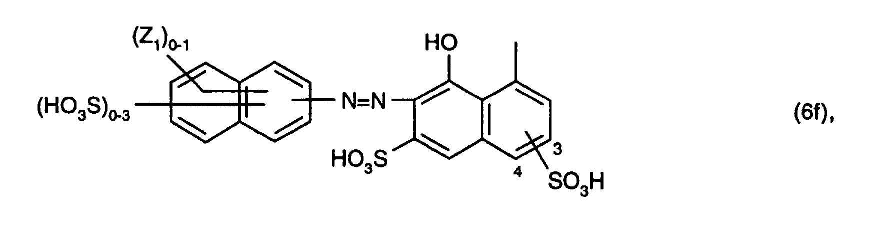 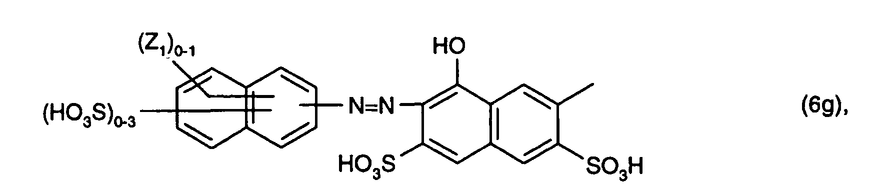 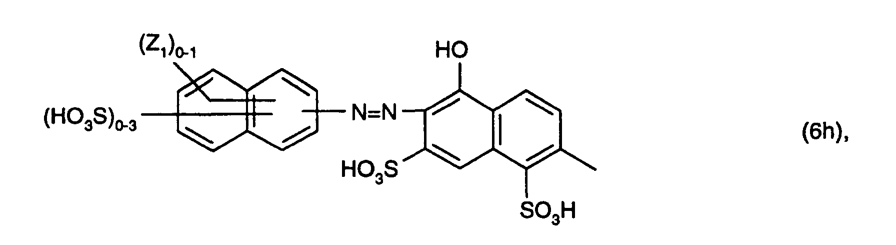 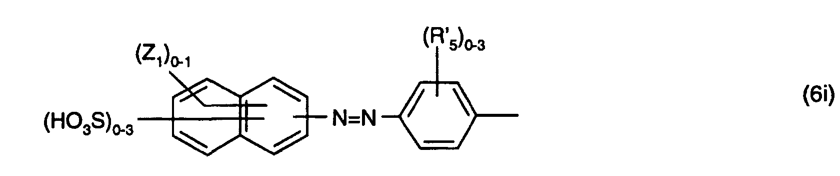 or 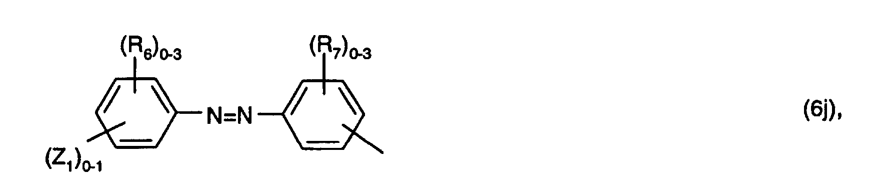 wherein (R₆)₀₋₃ has the above meaning, (R₇)₀₋₃ is 0 to 3 identical or different substituents selected from the group consisting of halogen, nitro, cyano, trifluoromethyl, sulfamoyl, carbamoyl, C₁-C₄alkyl, C₁-C₄alkoxy which is unsubstituted or substituted by hydroxy, sulfato or C₁-C₄alkoxy, amino, C₂-C₄alkanoylamino, ureido, hydroxy, carboxy, sulfomethyl, C₁-C₄alkylsulfonylamino and sulfo, and Z₁ has the meanings and preferred meanings given above.

The numbers at the naphthyl rings of the radicals of formulae (6a), (6b), (6e) and (6f) characterise the possible bonding positions.

Particularly preferred monoazo radicals D of formula (6) correspond to the radicals of formula (6a), (6b), (6c), (6d) or (6j), in particular (6j), the above meanings applying to (R₆)₀₋₃, (R₇)₀₋₃ and Z₁.

Very particularly preferred monoazo radicals D of formula (6) correspond to the radical of formula (6j') 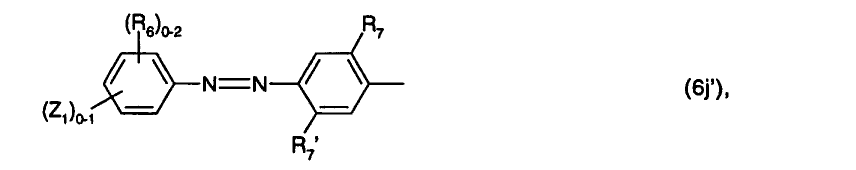 wherein
Z₁ may be a radical of formula (2a), wherein Y is vinyl or β-sulfatoethyl,
(R₆)₀₋₂ is 0 to 2 identical or different substituents from the C₁-C₄alkyl, C₁-C₄alkoxy, halogen, carboxy and sulfo group, preferably methyl, methoxy or sulfo, R₇ is hydrogen, sulfo, or C₁-C₄alkoxy which is unsubstituted or substituted in the alkyl moiety by hydroxy or sulfato, and
R₇' is hydrogen, C₁-C₄alkyl, C₁-C₄alkoxy, C₂-C₄alkanoylamino or ureido.

D preferably corresponds to a radical of formula (7) 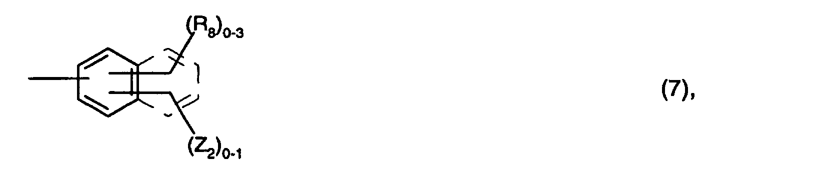 wherein
(R₈)₀₋₃ is 0 to 3 identical or different substituents selected from the group consisting of halogen, C₁-C₄alkyl, C₁-C₄alkoxy, carboxy and sulfo,
Z₂ may be a radical of formula (2a), (2b), (2c), (2d), (2e), (2f) or (2g), wherein Y is vinyl, β-chloroethyl or β-sulfatoethyl, Hal is bromo, I and m are each independently of the other the number 2 or 3, R₅ is hydrogen, and X₂, X₃ and X₄ are each independently of one another chloro or fluoro, T₁ is a fibre-reactive radical of formula (4c') or (4d'), 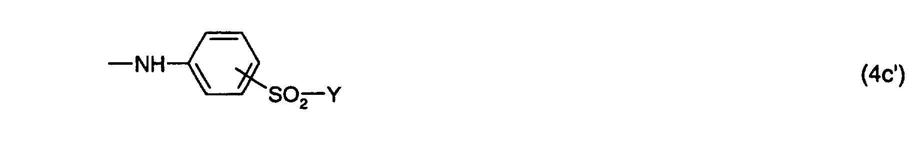 or 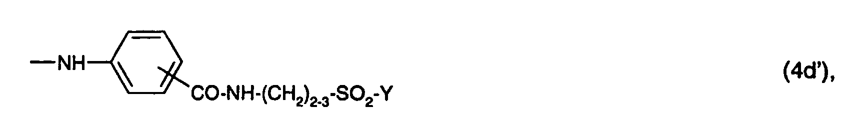
preferably (4c'), wherein Y is vinyl or β-sulfatoethyl, and T₂ is cyano or chloro; or
a monoazo radical of formula (6j'), wherein (R₆)₀₋₂, R₇, R₇' and Z₁ have the meanings and preferred meanings cited for formula (6j').

D is particularly preferably a radical of formula (7a), (7b), (7c), (7d) or (7e) 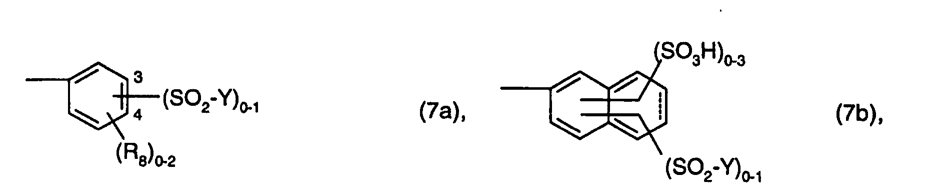 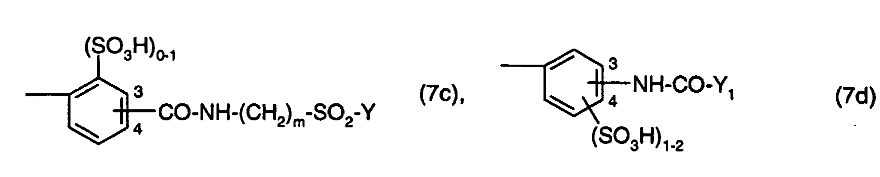 or 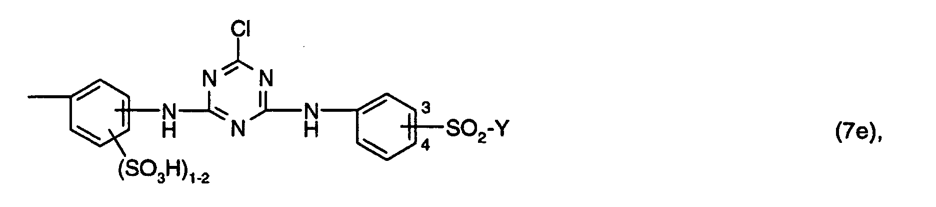 wherein
(R₈)₀₋₂ is 0 to 2 identical or different substituents selected from the halogen, C₁-C₄alkyl, C₁-C₄alkoxy and sulfo group, preferably methyl, methoxy and sulfo,
Y₁ is a radical -CH(Br)-CH₂-Br or -C(Br)=CH₂,
Y is vinyl, β-chloroethyl or β-sulfatoethyl, preferably vinyl or β-sulfatoethyl, and
m is the number 2 or 3, preferably 2.

The numbers in the radicals of formulae (7a), (7c), (7d) and (7e) characterise the possible bonding positions of the fibre-reactive radical.

D is preferably a radical of formula (7a), (7b) or (7e).

Suitable radicals A correspond, for example, to a radical of formula (7), wherein (R₈)₀₋₃ has the above meanings, and Z₂ is a radical of formula (2a), (2b), (2c), (2d) or (2e), the above meanings and preferred meanings applying to Y, Hal, I and m; preferably a radical of formula (7a), (7b), (7c) or (7d), in particular (7a) or (7b), wherein (R₈)₀₋₂, Y, Y₁ and m have the meanings and preferred meanings given for formulae (7a), (7b), (7c) and (7d).

Suitable radicals A containing no fibre-reactive group are, for example, the following radicals: 2-,3- or 4-sulfophenyl, 2,4-di-sulfophenyl, 2,5-di-sulfophenyl, 1,5-di-sulfonaphth-2-yl or 1,6-di-sulfonaphth-2-yl and, preferably, 2,5-di-sulfophenyl.

A is preferably phenyl which is substituted by 1 to 2 identical or different substituents selected from the methyl, methoxy, sulfo and fibre-reactive group of formula (2a), wherein Y is vinyl or β-sulfatoethyl.

A is particularly preferably 2,5-di-sulfophenyl or 4-(β-sulfatoethylsulfonyl)phenyl.

In a preferred embodiment of this invention, the novel reactive dyes correspond to formula (1a) 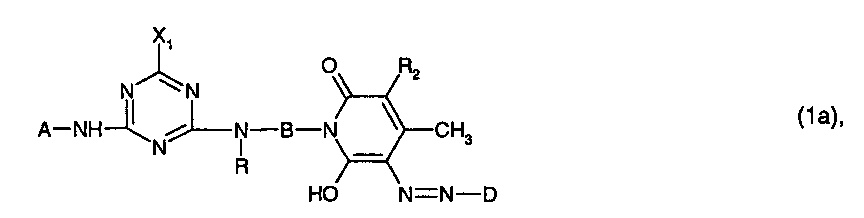 wherein
A is phenyl which is substituted by 1 to 2 identical or different substituents selected from the group consisting of methyl, methoxy, sulfo and fibre-reactive group of formula -SO₂-Y (2a), wherein Y is vinyl or β-sulfatoethyl,
B is straight-chain or branched C₂-C₆alkylene, preferably ethylene,
D corresponds to a radical of formula (7a), (7b), (7c), (7d) or (7e), preferably to (7a), (7b) or (7e), wherein (R₈)₀₋₂, Y, Y₁ and m have the above meanings and preferred meanings,
R₂ is carbamoyl or sulfomethyl, preferably carbamoyl,
R corresponds to a radical of formula (3a) 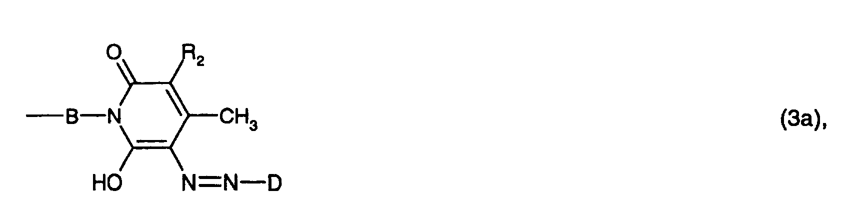 wherein B, D and R₂ have the meanings and preferred meanings cited above, and
X₁ is chloro or fluoro.

This invention also relates to a process for the preparation of the novel reactive dyes, which comprises reacting about 1 molar equivalent each of an amine of formula (8) 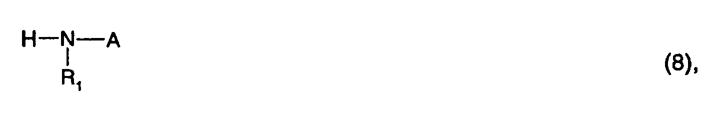 of a compound of formula (9) 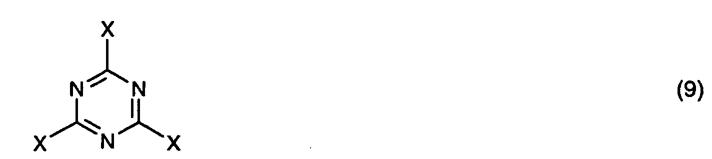 and of a compound of formula (10) 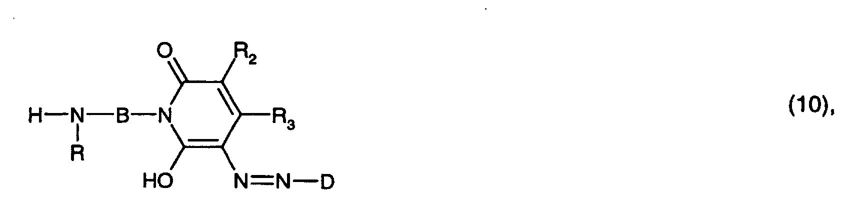 in any sequence with each other, wherein A, B, D, R₁, R₂, R₃ and R have the above meanings and X is halogen, preferably fluoro or chloro.

The individual process steps described above can be carried out in different order, some of them, where appropriate, also simultaneously, so that different process variants are possible. The reaction is usually carried out in stepwise succession, the sequence of the single reactions between the individual reaction components advantageously being dependent on the particular conditions.

One process variant is that, wherein a compound of formula (8) is condensed with cyanuric chloride or cyanuric fluoride and the product obtained is reacted with a compound of formula (10).

The condensation reactions between the compounds of formulae (8), (9) and (10) are usually carried out in analogy to known processes, normally in aqueous solution at temperatures in the range from e.g. 0 to 35°C and at a pH from e.g. 3 to 8.5. In the process in it also possible to replace the compound of formula (10) with the corresponding precursor of formula (11) 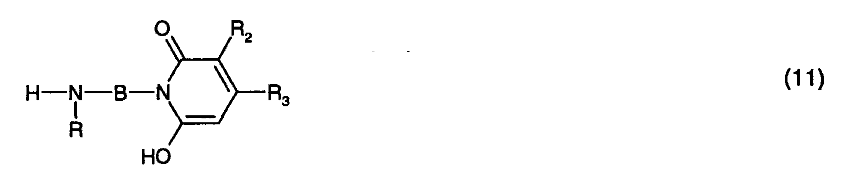 and to complete the azo chromophore only in the further course of the process by diazotisation of an amine of formula (12)

D-NH₂ (12)

and subsequent coupling reaction. B, D, R₂, R₃ and R have the meanings given above.

The compound of formula (10) is obtained by diazotising an amine of formula (12) and coupling the diazonium compound so obtained to a compound of formula (11).

The diazotisation of the compound of formula (12) and its coupling to the compound of formula (11), or to the condensate obtained according to the above procedure from the compound of formula (11), is carried out in customary manner, for example by diazotising the compound of formula (12) in mineral acidic solution, e.g. in hydrochloric solution, with a nitrite, e.g. sodium nitrite, at a low temperature, e.g. from 0 to 5°C, and then coupling the compound so obtained at a neutral to slightly acid pH, e.g. at a pH from 3 to 8.5, and at low temperatures, e.g. from 0 to 30°C, with the corresponding coupling component.

The compounds of formulae (8), (11) and (12) are known or can be prepared in analogy to known compounds.

The triazinyl compounds obtainable according to the process described above contain a halogen atom which, by reaction with a compound of formula X₁-H and at an elevated temperature, preferably from 20 to 70°C, and at a neutral to slightly alkaline pH which, depending on the compound of formula X₁-H used, may be e.g. from 7 to 9, can be converted into a X₁ group, wherein X₁ has the meanings given above except halogen. It is advantageous to use an excess of the compound of formula X₁-H.

The end product may also be subjected to a conversion reaction. Such a conversion reaction is, for example, the conversion of a vinylatable reactive group present in A and/or D into its vinyl form by treatment with dilute sodium hydroxide solution, for example the conversion of the β-sulfatoethylsulfonyl or β-chloroethylsulfonyl group into the vinyl sulfonyl radical. Such reactions are known per se.

The novel compounds of formula (1) are suitable as dyes for dyeing or printing a very wide range of materials, such as hydroxyl group-containing or nitrogen-containing fibre materials. Typical examples of such materials are silk, leather, wool, polyamide fibres and polyurethanes. The novel reactive dyes are particularly suitable for dyeing and printing cellulosic fibre materials of all kinds. Such cellulosic fibre materials are, for example, natural cellulose fibres, such as cotton, linen and hemp, as well as cellulose and regenerated cellulose, preferably cotton. The novel reactive dyes are also suitable for dyeing or printing cellulose-containing blended fabrics, e.g. blends of cotton and polyamide fibres or, in particular, cotton/polyester fibre blends.

The novel reactive dyes may applied and fixed to the fibre material in different manners, preferably in the form of aqueous dye solutions and printing pastes. They are suitable both for the exhaust process and for dyeing by the pad-dyeing process, in which the goods are impregnated with aqueous dye solutions which may contain salts, and the dyes are fixed after treatment with alkali, or in the presence of alkali, with or without the application of heat or by being stored for several hours at room temperature. After fixation, the dyeings or prints are thoroughly rinsed with cold and hot water, where appropriate with addition of a dispersant promoting the diffusion of the unfixed dye.

The novel reactive dyes are distinguished by high reactivity, good fixation and excellent build-up. They can therefore be used by the exhaust dyeing process at low dyeing temperatures and require only short steaming times in the pad-steam process. The degrees of fixation are high, and unfixed dye can be readily washed off. The differences between degree of exhaustion and degree of fixation is remarkably small, i.e. the soap loss is very small. The dyes of this invention are also particularly suitable for printing, especially on cotton, and for printing nitrogen-containing fibres, e.g. wool or silk, or blends containing wool or silk.

The dyeings and prints obtained with the dyes of this invention have excellent tinctorial strength and excellent fibre-dye bond stability both in the acid and in the alkaline range, and they also have good lightfastness and excellent wetfastness properties such as fastness to washing, water, sea-water, cross-dyeing and perspiration, as well as good fastness to pleating, ironing and rubbing.

The following Examples illustrate the invention in more detail. Temperatures are given in degrees Celsius, and parts and percentages are by weight, unless otherwise stated. The ratio of parts by weight to parts by volume is the same as that of the kilogram to the litre.

Example 1: 373 Parts of ethyl cyanoacetate are slowly added to 152 parts of diethylene triamine at 80 to 85°C. After the addition is complete, the resulting ethanol is distilled off under a weak vacuum. Subsequently, 750 parts of water are added to the reaction mixture and this mixture is distilled again under a weak vacuum. After charging the residue with 429 parts of ethyl acetate and 255 parts of a 30% aqueous ammonia solution, the temperature is raised to 90 to 95°C and the resulting water is distilled off under a weak vacuum. Subsequently, the reaction mixture is added to 1000 parts of an aqueous potassium chloride solution and the precipitated product is subjected to filtration and then dried. This yields 771 parts of a compound of formula 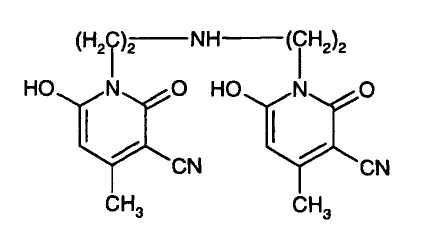 from which the compound of formula 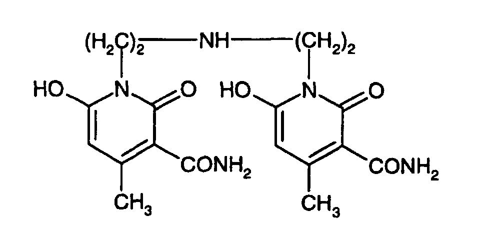 is obtained via saponification with sulfuric acid.

Example 2: 42.2 Parts of an amine of formula A₁₀-NH₂, wherein A₁₀ is a radical of formula 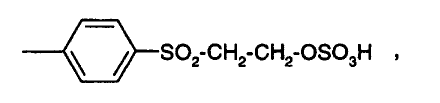 are dissolved in 200 parts of water with addition of a 20% sodium carbonate solution at room temperature and at pH 3.2, and a solution of 1.5 g of disodium hydrogenphosphate in 20 parts of water is then added. 21.3 Parts of cyanuric fluoride are added dropwise to this solution at a temperature below 2°C and at pH 6.2, which pH is kept constant by addition of a 2 N sodium hydroxide solution. A solution of 48.6 parts of the compound obtained according to Example 1 in 200 parts of water is added to the suspension so obtained, the pH being kept at 6.8 to 7.5 through addition of a 20% sodium carbonate solution and the temperature being kept at 10 to 20°C. To complete the reaction, the mixture is stirred for one hour at room temperature and the pH is then adjusted to 6.2 with 2 N of hydrochloric acid. This yields 700 parts of a solution containing a compound of formula

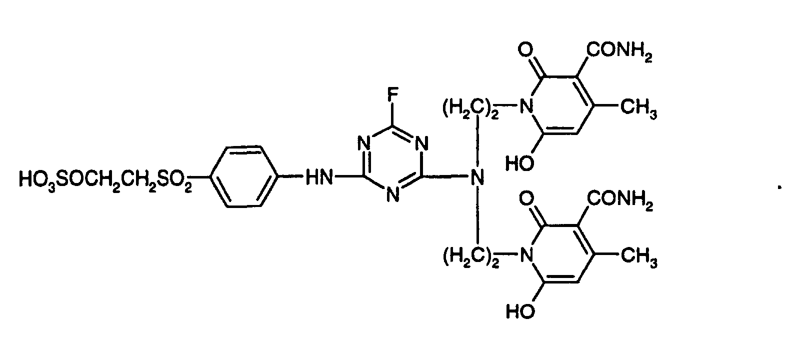

Example 3: A neutral solution of 18.2 parts of an amine of formula D₁₀-NH₂ in 150 parts of water, wherein D₁₀ is a radical of formula 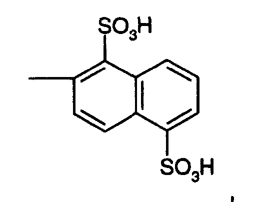 is charged with 15 parts of a 4 N sodium nitrite solution. A mixture consisting of 30 parts of ice/water and 15 parts of conc. hydrochloric acid is added to this solution at 0°C. The reaction mixture is stirred for one hour at 0°C. This mixture is then charged with 175 parts of the solution obtained according to Example 2 at 2 to 6°C, the pH being adjusted with sodium hydrogencarbonate first to 6.2 and then with a 20% sodium carbonate solution to 8.5. To complete the reaction, the mixture is stirred for one hour at 6 to 20°C and the pH is then adjusted to 6.2 with 2 N hydrochloric acid. The solution so obtained is then freed from salt by dialysis and is concentrated by evaporation, yielding 30.9 parts of a compound which, in the form of the free acid, corresponds to formula (101) 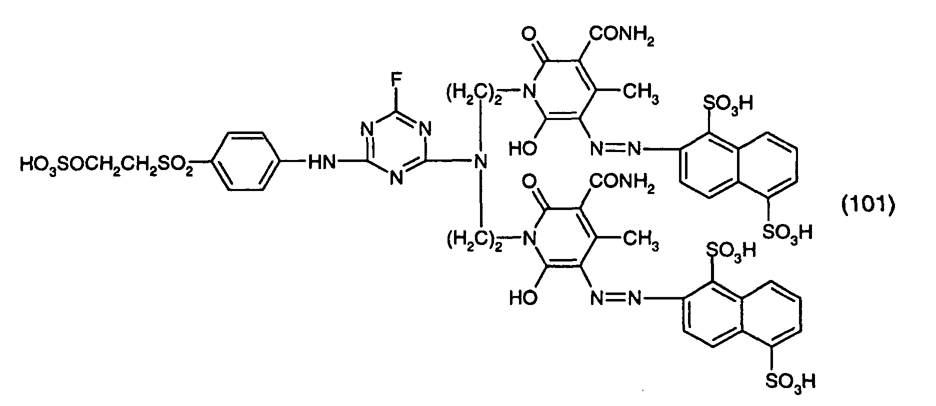 and which dyes cotton in a yellow shade having good allround fastness properties.

Examples 4 to 39: In analogy to the procedure described in Examples 2 and 3, dyes of the following general formula (102) are obtained 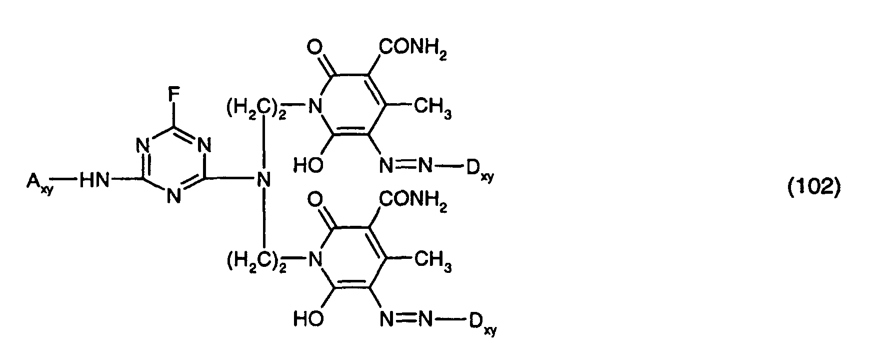 if the amine of formula A₁₀-NH₂ is replaced with the equimolar amount of an amine of formula A_{xy}-NH₂ and/or if the amine of formula D₁₀-NH₂ is replaced with the equimolar amount of an amine of formula D_{xy}-NH₂, wherein A_{xy} and D_{xy} each correspond to the radicals listed in Table 2, these radicals each having the meanings cited in Examples 2, 3 and in Table 1. The dyes dye cotton and wool in a yellowish orange shade having good allround fastness properties.

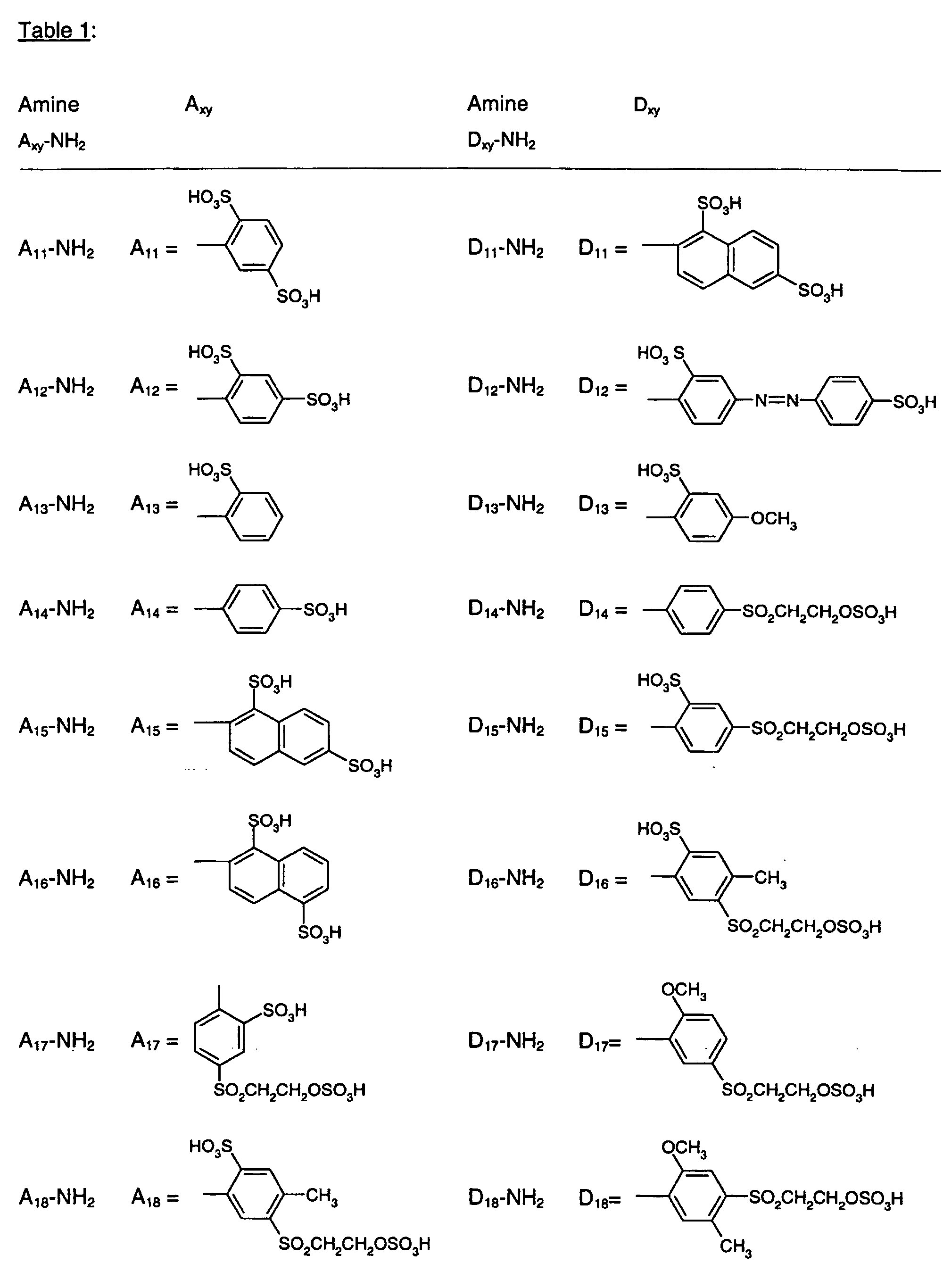

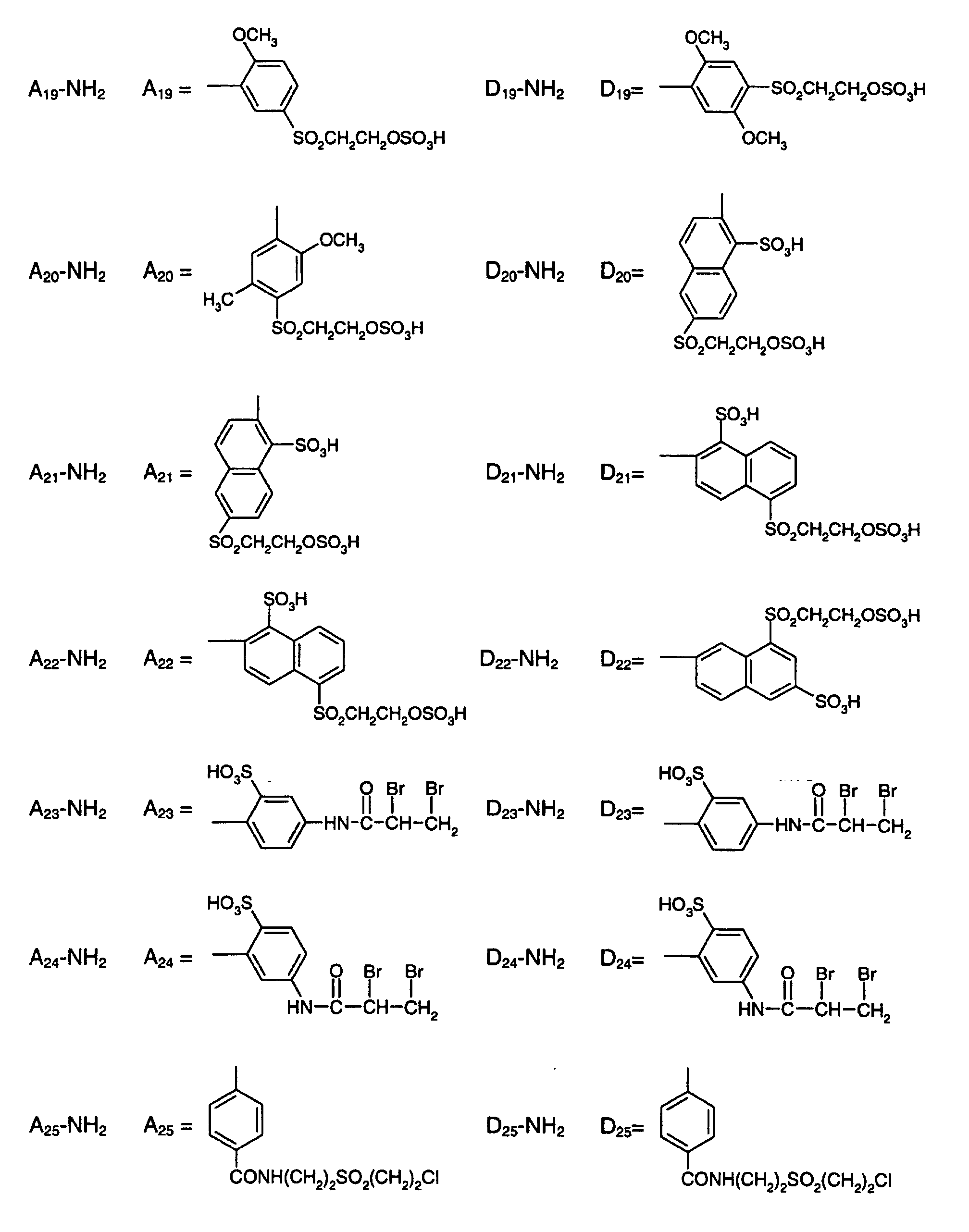

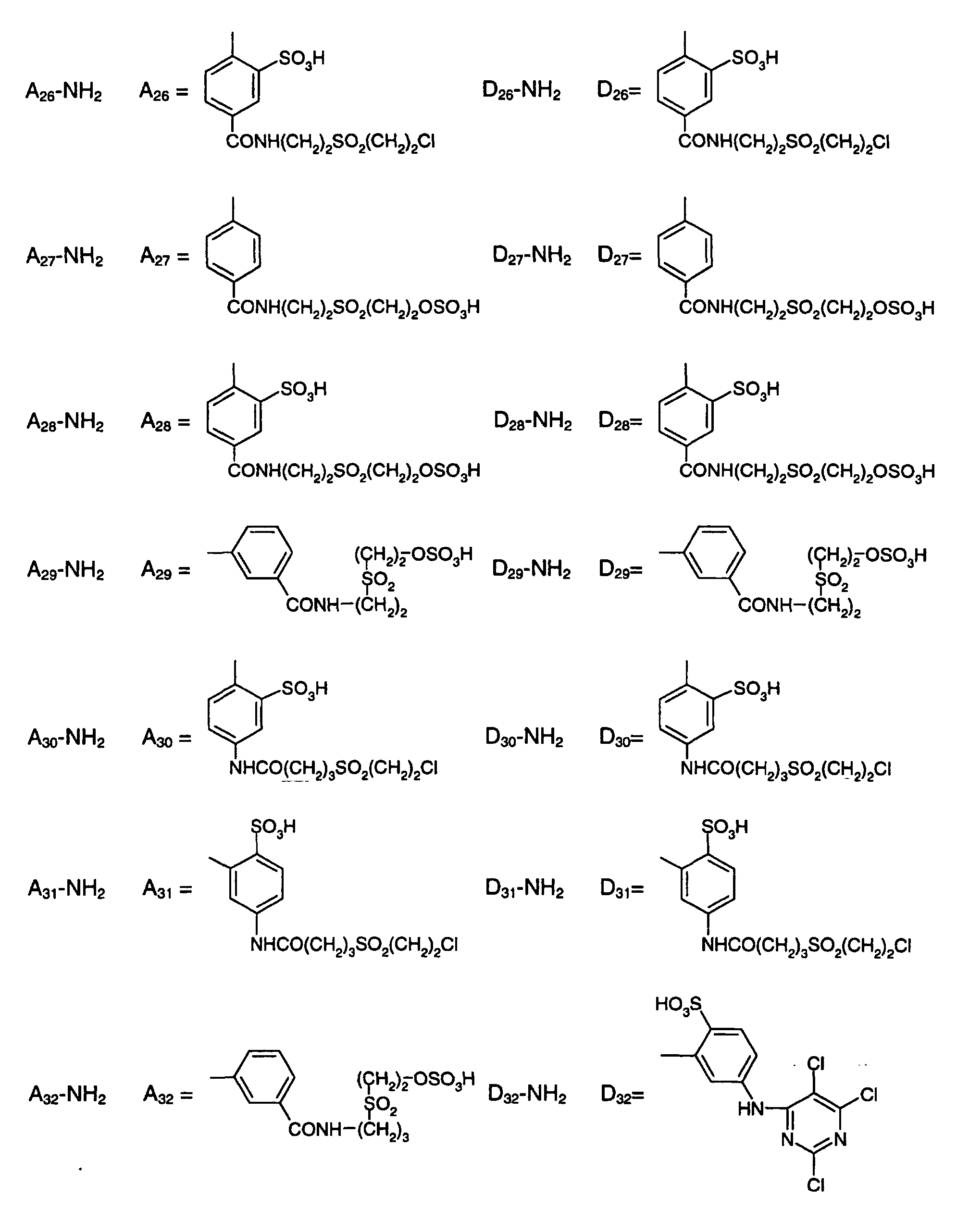

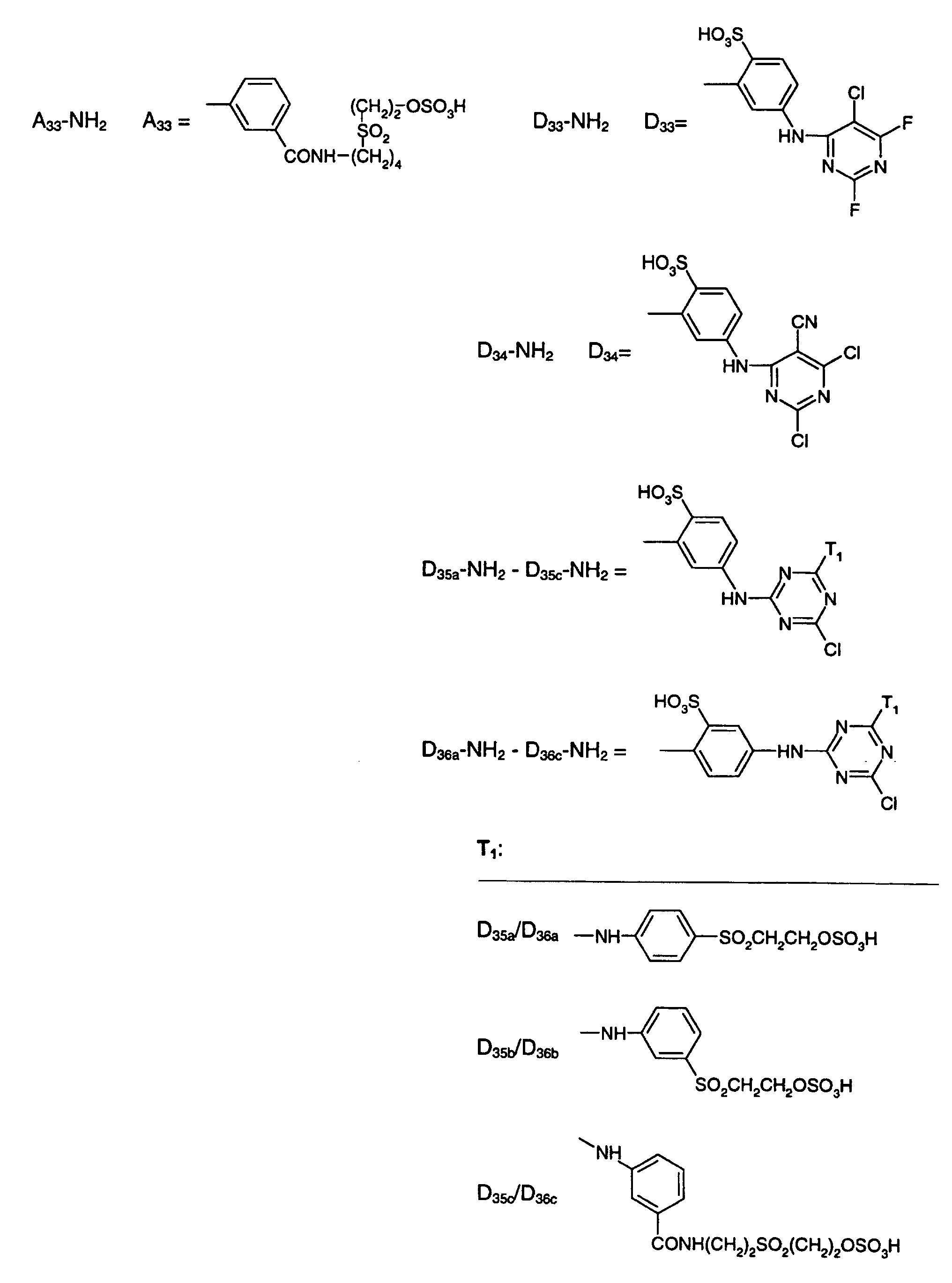

**Table 2:**

| Example | A_{xy} | D_{xy} | Example | A_{xy} | D_{xy} |
|---|---|---|---|---|---|
| 5 | A₁₀ | D₁₁ | 23 | A₂₃ | D₁₁ |
| 6 | A₁₀ | D₁₂ | 24 | A₂₃ | D₁₃ |
| 7 | A₁₀ | D₁₃ | 25 | A₂₄ | D₁₁ |
| 8 | A₁₇ | D₁₁ | 26 | A₂₄ | D₁₃ |
| 9 | A₁₇ | D₁₂ | 27 | A₂₅ | D₁₁ |
| 10 | A₁₇ | D₁₃ | 28 | A₂₅ | D₁₃ |
| 11 | A₁₈ | D₁₁ | 29 | A₂₆ | D₁₁ |
| 12 | A₁₈ | D₁₂ | 30 | A₂₆ | D₁₃ |
| 13 | A₁₈ | D₁₃ | 31 | A₂₇ | D₁₁ |
| 14 | A₁₉ | D₁₁ | 32 | A₂₇ | D₁₃ |
| 15 | A₁₉ | D₁₂ | 33 | A₂₈ | D₁₁ |
| 16 | A₁₉ | D₁₃ | 34 | A₂₈ | D₁₃ |
| 17 | A₂₀ | D₁₁ | 35 | A₂₉ | D₁₁ |
| 18 | A₂₀ | D₁₃ | 36 | A₂₉ | D₁₂ |
| 19 | A₂₁ | D₁₁ | 37 | A₃₀ | D₁₁ |
| 20 | A₂₁ | D₁₃ | 38 | A₃₀ | D₁₃ |
| 21 | A₂₂ | D₁₁ | 39 | A₃₁ | D₁₁ |
| 22 | A₂₂ | D₁₃ | 40 | A₃₁ | D₁₂ |

Example 40: 20.3 Parts of cyanuric chloride are thoroughly stirred in 150 parts of water with addition of a wetting agent at a temperature from 0°C. 27.8 Parts of aniline-2,5-disulfonic acid (A₁₁-NH₂) are added to this mixture. The temperature is kept for 5 hours at 0 to 5 °C and the pH is kept at 3 to 4 by addition of 2 N sodium hydroxide solution. The pH is then adjusted to 7 and the mixture is clarified by filtration. The resulting filtrate is charged over 2.5 hours with 40.5 parts of the compound obtained according to Example 1, the pH being kept at 7.5 to 8.5 by addition of a 2 N sodium hydroxide solution, the temperature rising to 36°C. To complete the reaction, the mixture is stirred for one hour at room temperature and the pH is then adjusted to 7 with 2 N hydrochloric acid. This yields 714 parts of a solution containing a compound which, in the form of the free acid, corresponds to formula

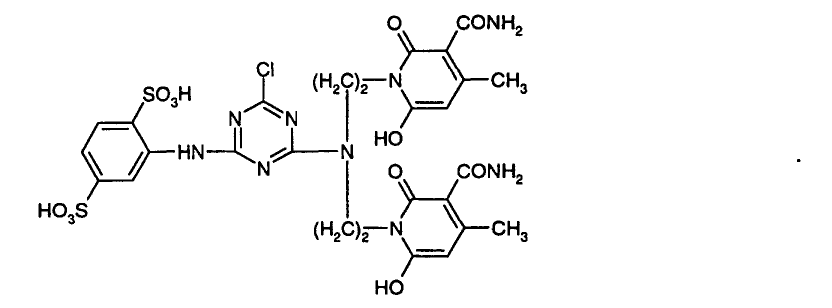

Example 41: A neutral solution of 14.1 parts of an amine of formula D₁₄-NH₂ in 120 parts of water, wherein D₁₄ is a radical of formula 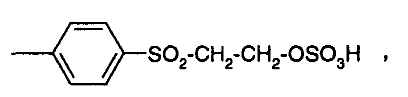 is charged with 12.5 parts of a 4 N sodium nitrite solution. A mixture consisting of 30 parts of ice/water and 12.5 parts of conc. hydrochloric acid is added to this solution at 0°C. The reaction mixture is stirred for one hour at 0 to 5°C and is then added to 179 parts of the solution obtained according to Example 40 at 5 to 7°C, the pH being adjusted over 30 minutes to 6 with sodium hydrogencarbonate. To complete the reaction, the mixture is stirred for another 30 minutes at 7 to 15°C. The resulting solution is freed from salt by dialysis and concentrated by evaporation. This yields 24.2 parts of a compound which, in the form of the free acid, corresponds to formula (103) 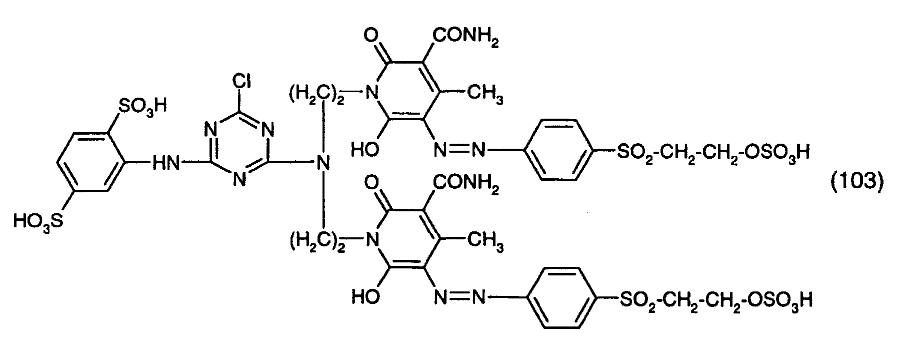 and which dyes cotton in a yellow shade having good allround fastness properties.

Examples 42 to 74: In analogy to the procedure described in Examples 40 and 41, the dyes of the following general formula (104) are obtained 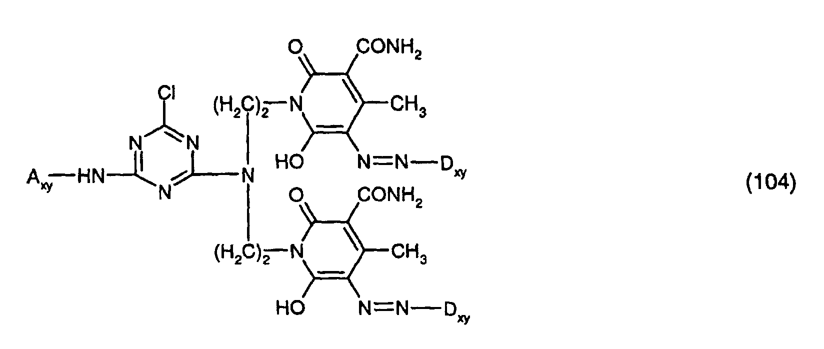 if aniline-2,5-disulfonic acid (A₁₁-NH₂) is replaced with the equimolar amount of an amine of formula A_{xy}-NH₂ and/or if an amine of formula D₁₄-NH₂ is replaced with the equimolar amount of an amine of formula D_{xy}-NH₂, wherein A_{xy} and D_{xy} each correspond to the radicals listed in Table 3, each of these radicals having the meanings cited in Table 1. The dyes dye cotton and wool in a yellowish orange shade having good allround fastness properties.

**Table 3:**

| Example | A_{xy} | D_{xy} | Example | A_{xy} | D_{xy} |
|---|---|---|---|---|---|
| 42 | A₁₁ | D₂₀ | 59 | A₁₃ | D₁₅ |
| 43 | A₁₁ | D₂₁ | 60 | A₁₃ | D₁₆ |
| 44 | A₁₁ | D₂₂ | 61 | A₁₃ | D₂₃ |
| 45 | A₁₁ | D₁₇ | 62 | A₁₃ | D₂₄ |
| 46 | A₁₁ | D₁₈ | 63 | A₁₃ | D₂₆ |
| 47 | A₁₁ | D₂₅ | 64 | A₁₃ | D₂₈ |
| 48 | A₁₁ | D₂₇ | 65 | A₁₃ | D₃₀ |
| 49 | A₁₁ | D₂₉ | 66 | A₁₃ | D₃₁ |
| 50 | A₁₁ | D₁₉ | 67 | A₁₄ | D₁₅ |
| 51 | A₁₂ | D₂₀ | 68 | A₁₄ | D₁₆ |
| 52 | A₁₅ | D₁₅ | 69 | A₁₁ | D₃₅ₐ |
| 53 | A₁₅ | D₁₆ | 70 | A₁₁ | D_{35b} |
| 54 | A₁₅ | D₂₃ | 71 | A₁₁ | D₃₆ₐ |
| 55 | A₁₅ | D₂₄ | 72 | A₁₂ | D_{36c} |
| 56 | A₁₅ | D₂₆ | 73 | A₁₂ | D₃₃ |
| 57 | A₁₆ | D₂₈ | 74 | A₁₁ | D₃₄ |
| 58 | A₁₆ | D₁₆ | | | |

### Dyeing Instruction I

100 Parts of cotton fabric are placed at 60°C in 1500 parts of a dye liquor containing 45 g/l of sodium chloride and 2 parts of the reactive dye obtained according to Example 3. After 45 minutes at 60°C, 20 g/l of calcined sodium carbonate are added. Dyeing is continued for another 45 minutes at this temperature. The dyed goods are then rinsed, soaped at the boil for a quarter of an hour with a non-ionic detergent, rinsed again and dried.

Alternatively to the above instruction, it is also possible to dye at 80°C instead of at 60°C.

### Dyeing Instruction II

0.1 Part of the dye of Example 3 is dissolved in 200 parts of water and then 0.5 part of sodium sulfate, 0.1 part of a levelling agent (based on the condensate from a higher aliphatic amine and ethylene oxide) and 0.5 part of sodium acetate are added. The pH is then adjusted to 5.5 with acetic acid (80%). The dye bath is heated for 10 minutes to 50°C and 10 parts of a wool fabric are then added. The dye bath is then heated over about 50 minutes to 100°C and dyeing is carried out at this temperature for 60 minutes. The dye bath is then allowed to cool to 90°C and the dyed goods are taken out. The wool fabric is washed with warm and cold water and is then spun and dried.

### Printing Instruction

3 Parts of the dye obtained in Example 3 are sprinkled, with rapid stirring, into 100 parts of a stock thickening which contains 50 parts of 5 % sodium alginate thickening, 27.8 parts of water, 20 parts of urea, 1 part of sodium m-nitrobenzenesulfonate and 1.2 parts of sodium hydrogen carbonate. A cotton fabric is printed with the printing paste so obtained and dried. The printed fabric is steamed for 2 minutes at 102°C in saturated steam, then rinsed, if necessary soaped at the boil, then rinsed once more and subsequently dried.

## Claims

1. A reactive dye of formula (1) 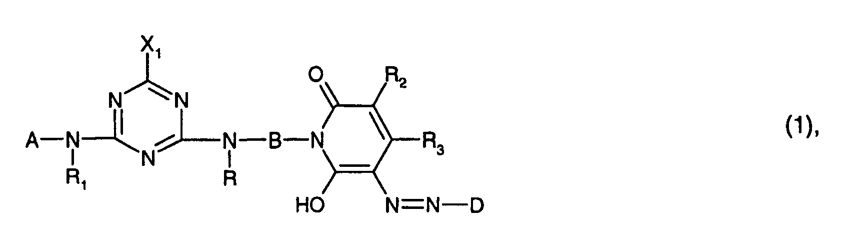 wherein
A is phenyl or naphthyl, each of which is unsubstituted or substituted by halogen, C₁-C₄alkyl, C₁-C₄alkoxy, carboxy, sulfo or a fibre-reactive group of formula (2a), (2b), (2c), (2d) or (2e)
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂Hal (2d)
or
-NH-CO-C(Hal)=CH₂ (2e),
B is an aliphatic linking group,
D is the radical of a diazo component of the benzene or naphthalene series,
R₁ is hydrogen or unsubstituted or substituted C₁-C₄alkyl,
R₂ is hydrogen, cyano, carbamoyl or sulfomethyl,
R₃ is hydrogen or C₁-C₄alkyl,
R corresponds to a radical of formula (3) 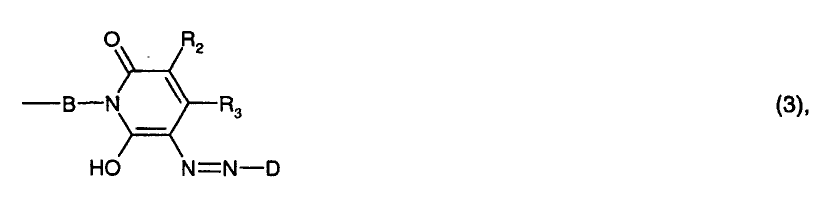 wherein B, D, R₂ and R₃ have the meanings cited above,
X₁ is halogen, hydroxy, C₁-C₄alkoxy, unsubstituted or substituted C₁-C₄alkylthio, unsubstituted or substituted amino, or a N-heterocycle which may contain additional heteroatoms,
Hal is chloro or bromo,
Y is vinyl or a -CH₂-CH₂-U radical, U is a group which is removable with alkali, and l and m are each independently of the other the number 2, 3 or 4, wherein
at least one of the radicals A and D contains a fibre-reactive group, or X₁ is halogen.

2. A reactive dye according to claim 1, wherein
A is phenyl which is substituted by 1 to 2 identical or different substituents selected from the group consisting of methyl, methoxy, sulfo and a fibre-reactive group of formula (2a), wherein Y is vinyl or β-sulfatoethyl.

3. A reactive dye according to either claim 1 or claim 2, wherein
B is straight-chain or branched C₂-C₆alkylene.

4. A reactive dye according to any one of claims 1 to 3, wherein
R₁ is hydrogen or C₁-C₄alkyl, preferably hydrogen.

5. A reactive dye according to any one of claims 1 to 4, wherein
R₂ is carbamoyl or sulfomethyl, and
R₃ is C₁-C₄alkyl.

6. A reactive dye according to any one of claims 1 to 5, wherein
X₁ is chloro or fluoro.

7. A reactive dye according to any one of claims 1 to 6, wherein
at least one of A and D contains a fibre-reactive group.

8. A reactive dye according to any one of claims 1 to 7, wherein
D is a radical of formula (7) or (6j') 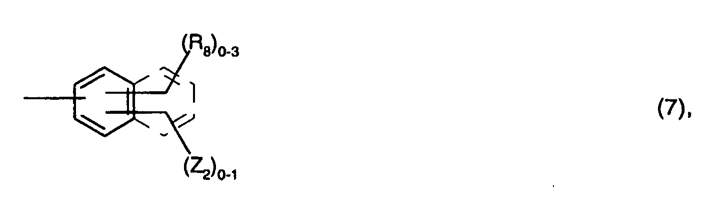 wherein
(R₈)₀₋₃ is 0 to 3 identical or different substituents selected from the group consisting of halogen, C₁-C₄alkyl, C₁-C₄alkoxy, carboxy and sulfo,
Z₂ may be a radical of formula (2a), (2b), (2c), (2d), (2e), (2f) or (2g)
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂Hal (2d),
-NH-CO-C(Hal)=CH₂ (2e), 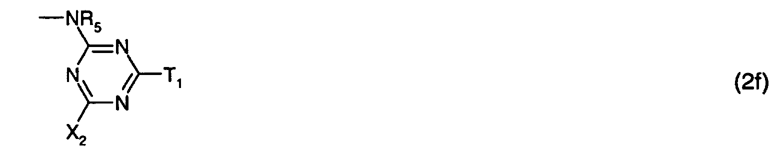
or 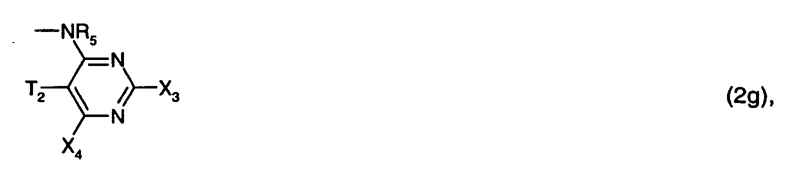
wherein
Y is vinyl, β-chloroethyl or β-sulfatoethyl, Hal is bromo, I and m are each independently of the other the number 2 or 3, R₅ is hydrogen and X₂, X₃ and X₄ are each independently of one another chloro or fluoro, T₁ is a fibre-reactive radical of formula (4c') or (4d'), 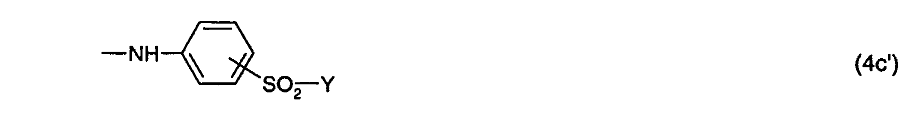 or 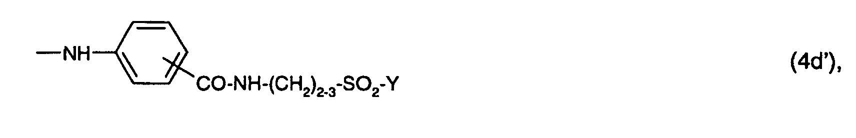
wherein Y is vinyl or β-sulfatoethyl, and T₂ is cyano or chloro; or 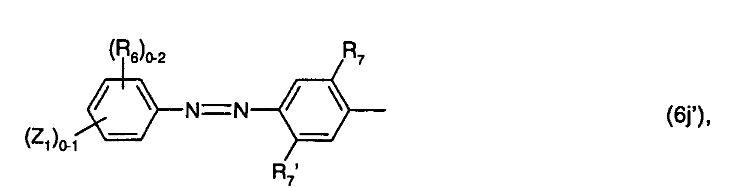 wherein
Z₁ may be a radical of formula (2a),
wherein Y is vinyl or β-sulfatoethyl,
(R₆)₀₋₂ is 0 to 2 identical or different substituents from the C₁-C₄alkyl, C₁-C₄alkoxy, halogen, carboxy and sulfo group,
R₇ is hydrogen, sulfo, or C₁-C₄alkoxy which is unsubstituted or substituted in the alkyl moiety by hydroxy or sulfato, and
R₇' is hydrogen, C₁-C₄alkyl, C₁-C₄alkoxy, C₂-C₄alkanoylamino or ureido.

9. A reactive dye according to any one of claims 1 to 8, wherein
D corresponds to a radical of formula (7a), (7b), (7c), (7d) or (7e) 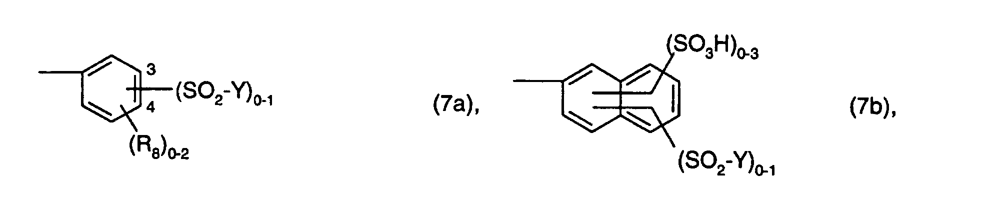 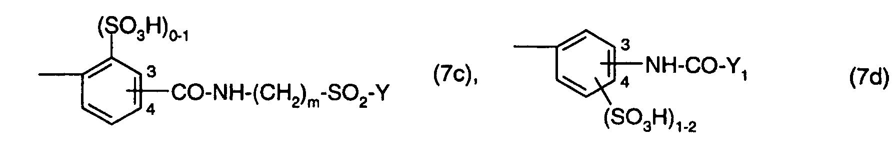 or 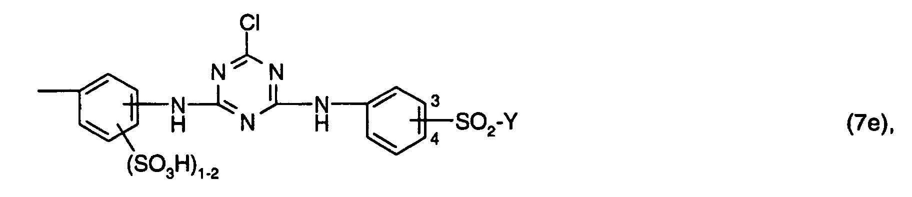 wherein
(R₈)₀₋₂ is 0 to 2 identical or different substituents selected from the group consisting of halogen, C₁-C₄alkyl, C₁-C₄alkoxy and sulfo,
Y₁ is a -CH(Br)-CH₂-Br or -C(Br)=CH₂ radical,
Y is vinyl, β-chloroethyl or β-sulfatoethyl, and
m is the number 2 or 3.

10. A reactive dye according to claim 9, which corresponds to formula (1 a) 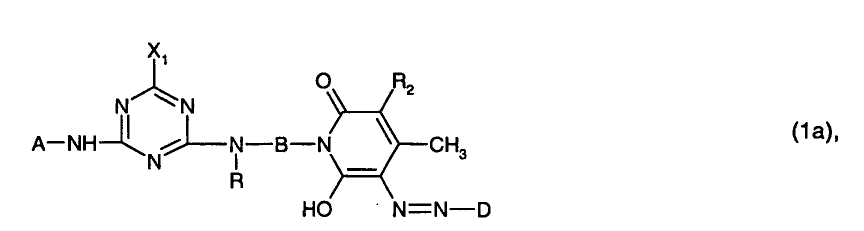 wherein
A is phenyl which is substituted by 1 to 2 identical or different substituents selected from the group consisting of methyl, methoxy, sulfo and the fibre-reactive group of formula -SO₂-Y (2a), wherein Y is vinyl or β-sulfatoethyl,
B is straight-chain or branched C₂-C₆alkylene,
D corresponds to a radical of formula (7a), (7b), (7c), (7d) or (7e), wherein (R₈)₀₋₂, Y, Y₁ and
m have the meanings and preferred meanings given in claim 9,
R₂ is carbamoyl or sulfomethyl,
R corresponds to a radical of formula (3a) 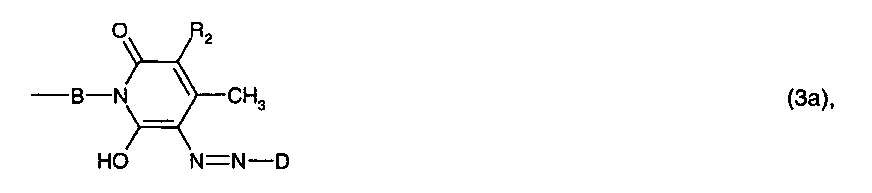 wherein B, D and R₂ have the meanings cited above, and
X₁ is chloro or fluoro.

11. A process for the preparation of a reactive dye according to claim 1, which comprises reacting about 1 molar equivalent each of an amine of formula (8) 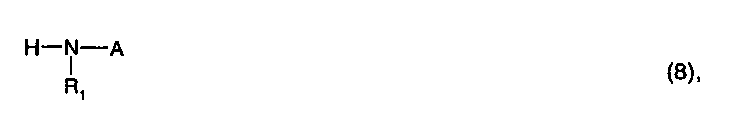 of a compound of formula (9) 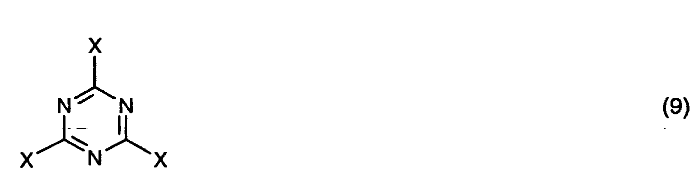 and of a compound of formula (10) 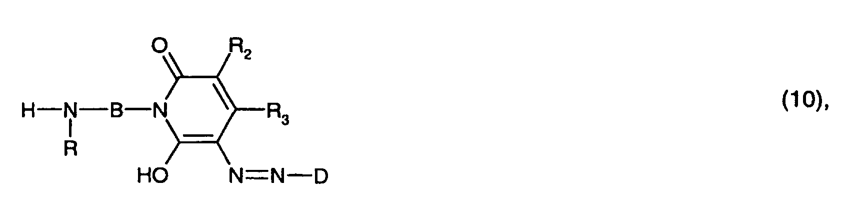 in any sequence with each other, wherein A, B, D, R₁, R₂, R₃ and R have the meanings given in claim 1 and X is halogen.

12. Use of a reactive dye according to any one of claims 1 to 10 or of the reactive dyes obtained according to claim 11 for dyeing or printing hydroxyl group-containing or nitrogen-containing fibre materials.

13. Use according to claim 12, which comprises dyeing or printing cellulosic fibre materials, preferably cotton-containing fibre materials.

## Patentansprüche

1. Reaktivfarbstoffe der Formel (1) 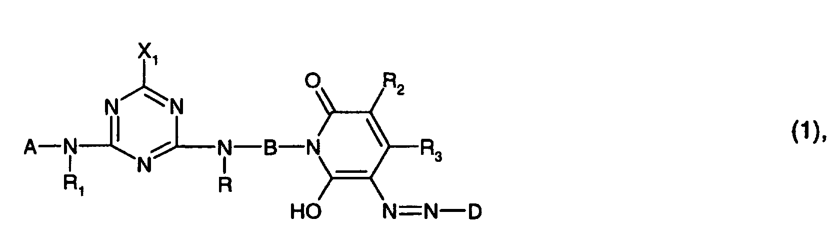 worin
A für gegebenenfalls durch Halogen, C₁-C₄-Alkyl, C₁-C₄-Alkoxy, Carboxy, Sulfo oder eine faserreaktive Gruppe der Formel (2a), (2b), (2c), (2d) oder (2e)
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂-Hal (2d)
oder
-NH-CO-C(Hal)=CH₂ (2e)
substituiertes Phenyl oder Naphthyl steht,
B ein aliphatisches Brückenglied ist,
D den Rest einer Diazokomponente der Benzol- oder Naphthalinreihe bedeutet,
R₁ für Wasserstoff oder gegebenenfalls substituiertes C₁-C₄-Alkyl steht,
R₂ für Wasserstoff, Cyano, Carbamoyl oder Sulfomethyl steht,
R₃ Wasserstoff oder C₁-C₄-Alkyl ist,
R einem Rest der Formel (3) 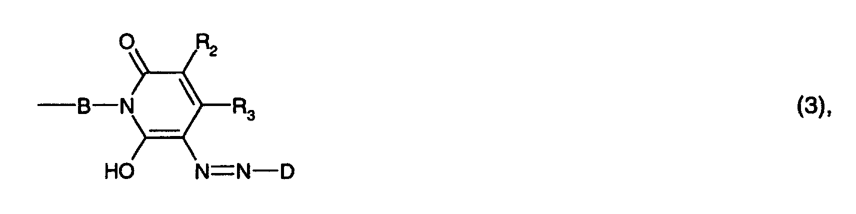 entspricht, worin B, D, R₂ und R₃ die oben angegebenen Bedeutungen haben,
X₁ Halogen, Hydroxy, C₁-C₄-Alkoxy, gegebenenfalls substituiertes C₁-C₄-Alkylthio, gegebenenfalls substituiertes Amino oder ein gegebenenfalls weitere Heteroatome enthaltender N-Heterocyclus ist,
Hal für Chlor oder Brom steht,
Y Vinyl oder einen Rest -CH₂-CH₂-U bedeutet und U eine alkalisch abspaltbare Gruppe ist, und I und m unabhängig voneinander für die Zahl 2, 3 oder 4 stehen,
wobei mindestens einer der Reste A und D eine faserreaktive Gruppe enthält oder X₁ Halogen ist.

2. Reaktivfarbstoffe gemäss Anspruch 1, **dadurch gekennzeichnet, dass**
A durch 1 bis 2 gleiche oder voneinander verschiedene Substituenten ausgewählt aus der Gruppe Methyl, Methoxy, Sulfo und faserreaktive Gruppe der Formel (2a) substituiertes Phenyl bedeutet, worin Y Vinyl oder β-Sulfatoethyl ist,

3. Reaktivfarbstoffe gemäss einem der Ansprüche 1 und 2, **dadurch gekennzeichnet, dass** B geradkettiges oder verzweigtes C₂-C₆-Alkylen bedeutet.

4. Reaktivfarbstoffe gemäss einem der Ansprüche 1 bis 3, **dadurch gekennzeichnet, dass** R₁ für Wasserstoff oder C₁-C₄-Alkyl, insbesondere Wasserstoff, steht.

5. Reaktivfarbstoffe gemäss einem der Ansprüche 1 bis 4, **dadurch gekennzeichnet, dass** R₂ Carbamoyl oder Sulfomethyl ist und
R₃ C₁-C₄-Alkyl bedeutet.

6. Reaktivfarbstoffe gemäss einem der Ansprüche 1 bis 5, **dadurch gekennzeichnet, dass** X₁ Chlor oder Fluor bedeutet.

7. Reaktivfarbstoffe gemäss einem der Ansprüche 1 bis 6, **dadurch gekennzeichnet, dass** mindestens einer der Reste A und D eine faserreaktive Gruppe enthält.

8. Reaktivfarbstoffe gemäss einem der Ansprüche 1 bis 7, **dadurch gekennzeichnet, dass** D einem Rest der Formel (7) oder (6j') 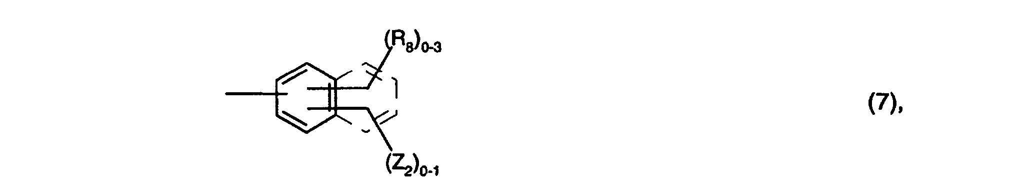 worin
(R₈)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy und Sulfo steht,
Z₂ gegebenenfalls einen Rest der Formel (2a), (2b), (2c), (2d), (2e), (2f) oder (2g)
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂-Hal (2d),
-NH-CO-C(Hal)=CH₂ (2d), 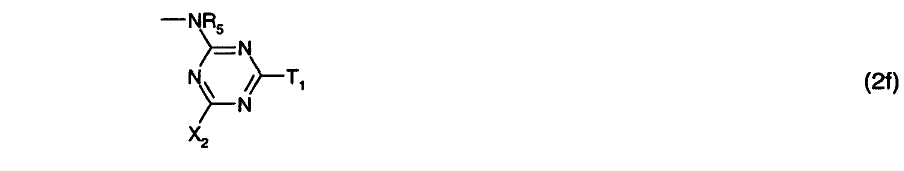
oder 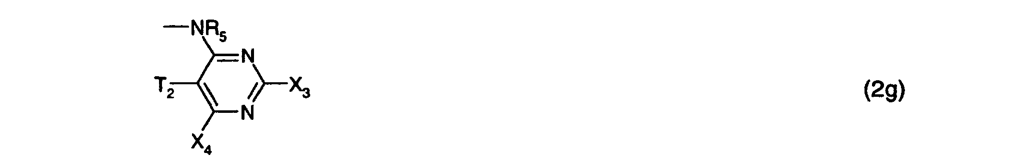
bedeutet, worin
Y Vinyl, β-Chlorethyl oder β-Sulfatoethyl, Hal Brom, l und m unabhängig voneinander die Zahl 2 oder 3, R₅ Wasserstoff und X₂, X₃ und X₄ unabhängig voneinander Chlor oder Fluor sind, T₁ für einen faserreaktiven Rest der Formel (4c') oder (4d'), 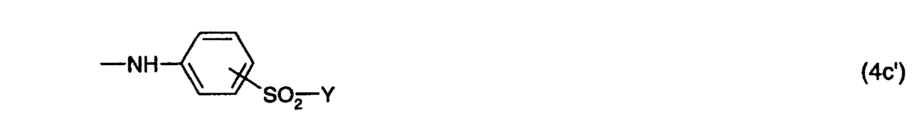 oder 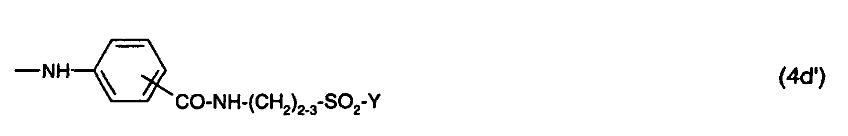
steht, worin Y Vinyl oder β-Sulfatoethyl ist, und T₂ Cyano oder Chlor bedeutet; oder 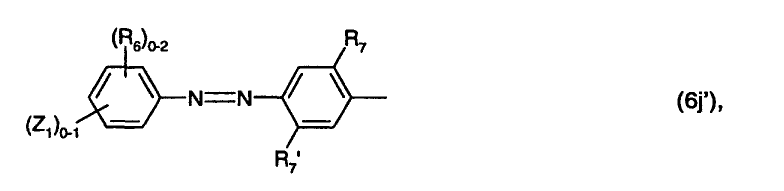 worin
Z₁ gegebenenfalls für einen Rest der Formel (2a) steht,
worin Y Vinyl oder β-Sulfatoethyl ist,
(R₆)₀₋₂ für 0 bis 2 gleiche oder verschiedene Substituenten aus der Gruppe C₁-C₄-Alkyl, C₁-C₄-Alkoxy, Halogen, Carboxy und Sulfo steht,
R₇ Wasserstoff, Sulfo oder gegebenenfalls im Alkylteil durch Hydroxy oder Sulfato substituiertes C₁-C₄-Alkoxy bedeutet, und
R₇' für Wasserstoff, C₁-C₄-Alkyl, C₁-C₄-Alkoxy, C₂-C₄-Alkanoylamino oder Ureido steht.

9. Reaktivfarbstoffe gemäss einem der Ansprüche 1 bis 8, **dadurch gekennzeichnet, dass** der Rest D einem Rest der Formel (7a), (7b), (7c), (7d) oder (7e) 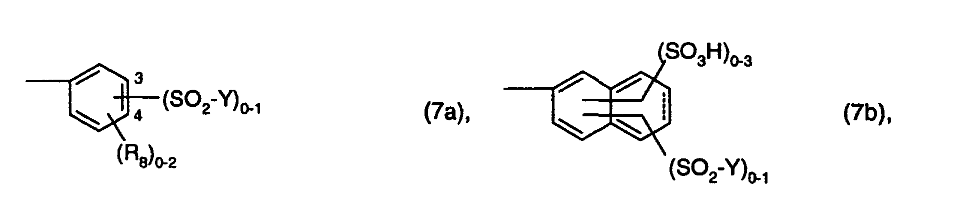 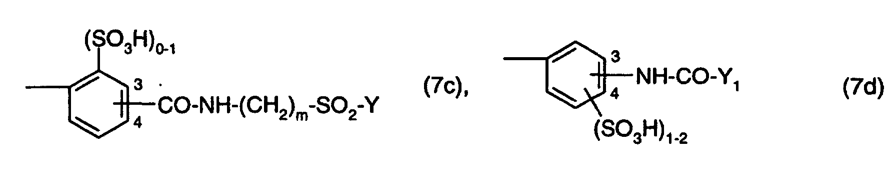 oder 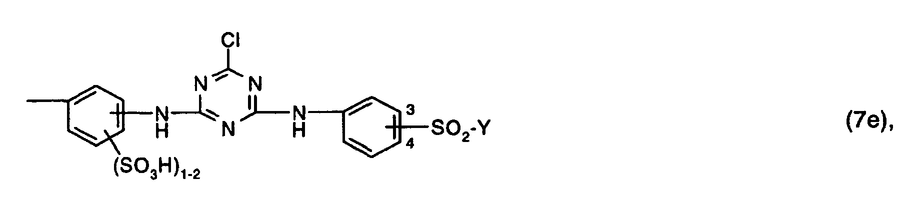 entspricht, worin
(R₈)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo steht,
Y₁ einen Rest -CH(Br)-CH₂-Br oder -C(Br)=CH₂ bedeutet,
Y Vinyl, β-Chlorethyl oder β-Sulfatoethyl ist, und
m die Zahl 2 oder 3 bedeutet.

10. Reaktivfarbstoffe gemäss Anspruch 9, **dadurch gekennzeichnet, dass** sie der Formel (1a) 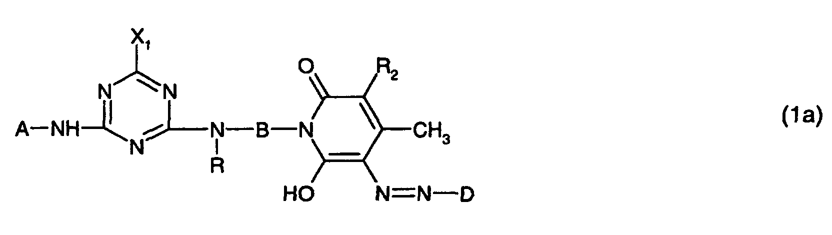 entsprechen, worin
A durch 1 bis 2 gleiche oder voneinander verschiedene Substituenten ausgewählt aus der Gruppe Methyl, Methoxy, Sulfo und faserreaktive Gruppe der Formel -SO₂-Y (2a) substituiertes Phenyl bedeutet, worin Y Vinyl oder β-Sulfatoethyl ist,
B geradkettiges oder verzweigtes C₂-C₆-Alkylen ist,
D einem Rest der Formel (7a), (7b), (7c), (7d) oder (7e) entspricht, worin für (R₈)₀₋₂, Y, Y₁ und m die in Anspruch 10 angegebenen Bedeutungen gelten,
R₂ Carbamoyl oder Sulfomethyl ist,
R einem Rest der Formel (3a) 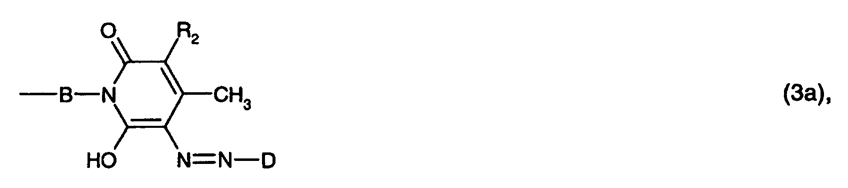
entspricht, worin B, D und R₂ die oben angegebenen Bedeutungen haben, und
X₁ Chlor oder Fluor bedeutet.

11. Verfahren zur Herstellung von Reaktivfarbstoffen gemäss Anspruch 1, **dadurch gekennzeichnet, dass** man je in etwa 1 Moläquivalent eines Amins der Formel (8) 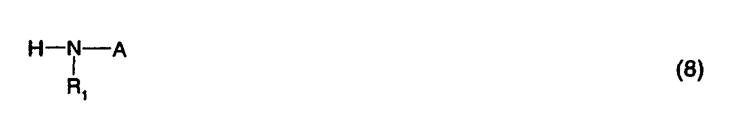 eine Verbindung der Formel (9) 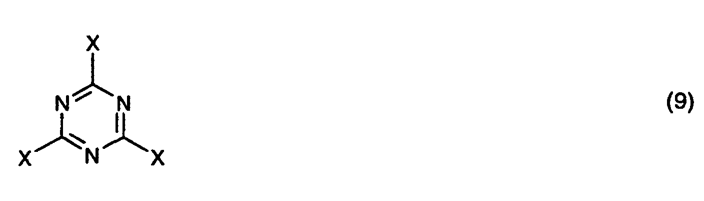 und
eine Verbindung der Formel (10) 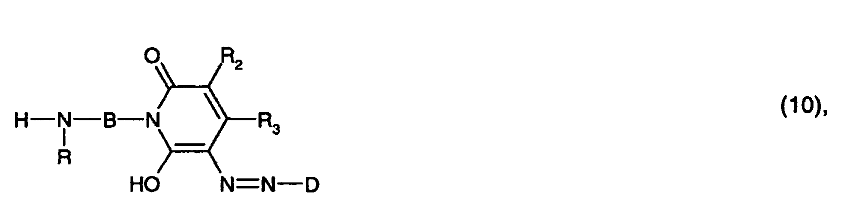 in beliebiger Reihenfolge miteinander umsetzt, wobei für A, B, D, R₁, R₂, R₃ und R die in Anspruch 1 angegebenen Bedeutungen gelten und X Halogen bedeutet.

12. Verwendung von Reaktivfarbstoffen gemäss einem der Ansprüche 1 bis 10 bzw. der gemäss Anspruch 11 erhaltenen Reaktivfarbstoffe zum Färben oder Bedrucken von hydroxylgruppenhaltigen oder stickstoffhaltigen Fasermaterialien.

13. Verwendung gemäss Anspruch 12, **dadurch gekennzeichnet, dass** man cellulosehaltige Fasermaterialien, insbesondere baumwollhaltige Fasermaterialien, färbt oder bedruckt.

## Revendications

1. Colorant réactif de formule (1) 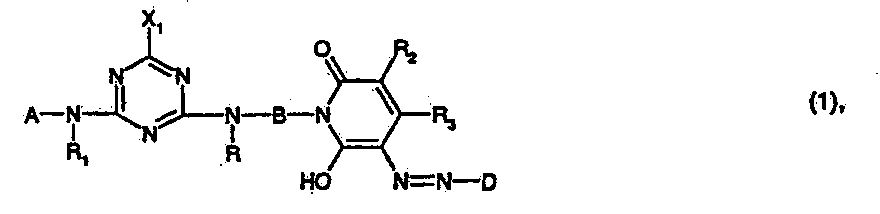 où
A représente un groupe phényle ou naphtyle, chacun étant non substitué ou substitué par un substituant halogène, alkyle en C₁-C₄, alkoxy en C₁-C₄, carboxy, sulfo ou un groupe réactif sur la fibre de formules (2a), (2b), (2c), (2d) ou (2e)
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂Hal (2d)
ou
-NH-CO-C(Hal)=CH₂ (2e),
B est un groupe de liaison aliphatique,
D est le radical d'un composant diazoïque de la famille du benzène ou du naphtalène,
R₁ représente un atome d'hydrogène ou un groupe alkyle en C₁-C₄ non substitué ou substitué
R₂ représente un atome d'hydrogène, un groupe cyano, carbamoyle ou sulfométhyle,
R₃ représente un atome d'hydrogène ou un groupe alkyle en C₁-C₄,
R correspond à un radical de formule (3) 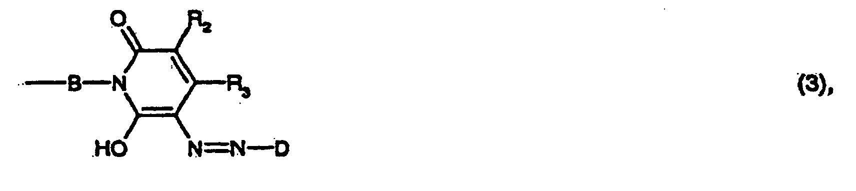 où B, D, R₂ et R₃ possèdent les significations citées ci-dessus,
X₁ représente un atome d'halogène, un groupe hydroxy, alkoxy en C₁-C₄, (alkyl en C₁-C₄)thio non substitué où substitué, amino non substitué ou substitué, ou un N-hétérocycle qui peut contenir d'autres hétéroatomes,
Hal représente un groupe chloro ou bromo,
Y représente un groupe vinyle ou un radical -CH₂-CH₂-U, U est un groupe éliminable par des alcalis, et 1 et m, indépendamment l'un de l'autre, valent chacun 2, 3 ou 4, où
au moins un des radicaux A et D contient un groupe réactif sur la fibre, ou X₁ représente un atome d'halogène.

2. Colorant réactif selon la revendication 1, où
A représente un groupe phényle qui est substitué par 1 ou 2 substituants identiques ou différents pris parmi le groupe comprenant méthyle, méthoxy, sulfo et un groupe réactif sur la fibre de formule (2a), où Y représente un groupe vinyle ou β-sulfatoéthyle.

3. Colorant réactif selon la revendication 1 ou 2, où
B représente un groupe alkylène en C₂-C₆ linéaire ou ramifié.

4. Colorant réactif selon l'une des revendications 1 à 3, où
R₁ représente un atome d'hydrogène ou un groupe alkyle en C₁-C₄, de préférence un atome d'hydrogène.

5. Colorant réactif selon l'une des revendications 1 à 4, où
R₂ un groupe carbamoyle ou sulfométhyle, et
R₃ représente un groupe alkyle en C₁-C₄.

6. Colorant réactif selon l'une des revendications 1 à 5, où
X₁ représente un groupe chloro ou fluoro.

7. Colorant réactif selon l'une des revendications 1 à 6, où
au moins un des A et D contient un groupe réactif sur la fibre.

8. Colorant réactif selon l'une des revendications 1 à 7, où
D est un radical de formule (7) ou (6j') 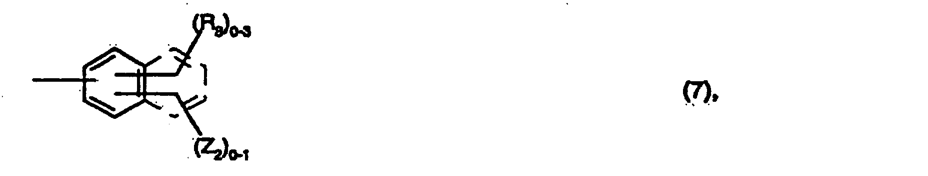 où
(R₈)₀₋₃ représente 0 à 3 substituants identiques ou différents pris dans le groupe comprenant halogène, alkyle en C₁-C₄, alkoxy en C₁-C₄, carboxy et sulfo,
Z₂ peut représenter un radical de formule (2a), (2b), (2c), (2d), (2e), (2f) ou (2g),
-SO₂-Y (2a),
-NH-CO-(CH₂)ₗ-SO₂-Y (2b),
-CONH-(CH₂)ₘ-SO₂-Y (2c),
-NH-CO-CH(Hal)-CH₂Hal (2d)
ou
-NH-CO-C(Hal)=CH₂ (2e), 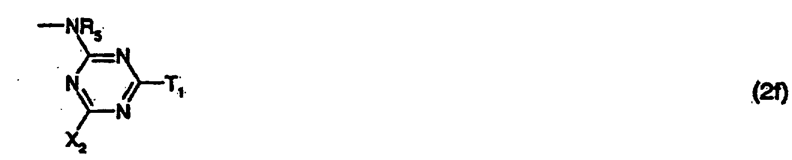
ou 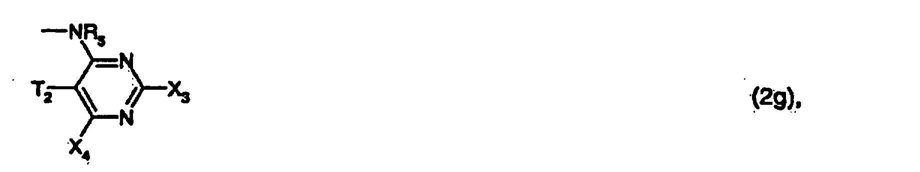
où
Y représente un groupe vinyle, β-chloroéthyle ou β-sulfatoéthyle, Hal représente bromo, l et m valent chacun indépendamment l'un de l'autre 2 ou 3, R₅ représente un atome d'hydrogène et X₂, X₃ et X₄, indépendamment les uns des autres, représentent chacun chloro ou bromo, T₁ est un radical réactif sur la fibre (4c') ou (4d') 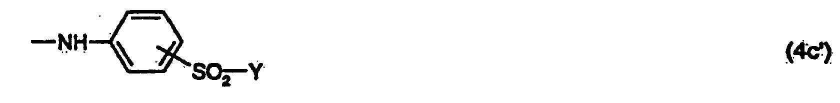 ou 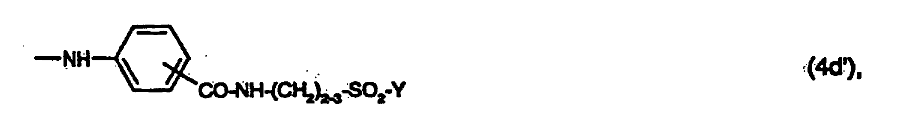 où Y représente un groupe vinyle ou β-sulfatoéthyle, et T₂ un groupe cyano ou chloro ; ou 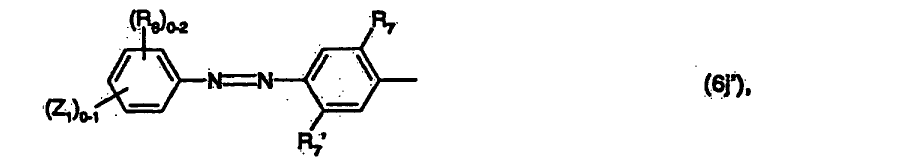 où
Z₁ peut être un radical de formule (2a),
où Y représente un groupe vinyle ou β-sulfatoéthyle,
(R₆)₀₋₂ représente 0 à 2 substituants identiques ou différents pris parmi les groupes alkyle en C₁-C₄, alkoxy en C₁-C₄, halogène, carboxy et sulfo,
R₇ représente un atome d'hydrogène, un groupe sulfo ou alkoxy en C₁-C₄, qui est non substitué ou substitué dans le fragment alkyle par un substituant hydroxy ou sulfato, et
R₇' représente un atome d'hydrogène, un groupe alkyle en C₁-C₄, alkoxy en C₁-C₄, (alcanoyl en C₂-C₄)amino ou uréido.

9. Colorant réactif selon l'une quelconque des revendications 1 à 8, où
D correspond à un radical de formules (7a), (7b), (7c), (7d) ou (7e) 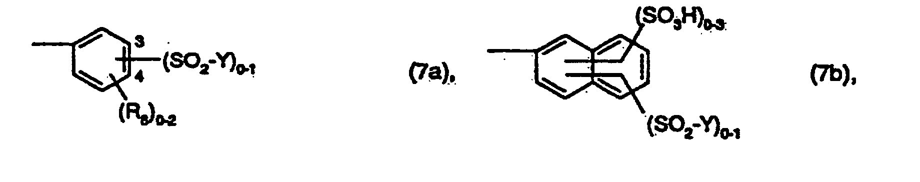 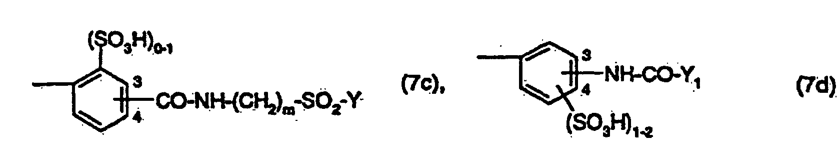 ou 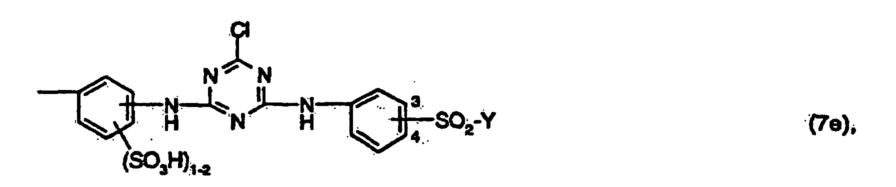 où
(R₈)₀₋₂ représente 0 à 2 substituants identiques ou différents pris dans le groupe comprenant halogène, alkyle en C₁-C₄, alkoxy en C₁-C₄ et sulfo,
Y₁ est un radical -CH(Br)-CH₂-Br ou -C(Br)=CH₂,
Y représente un groupe vinyle, β-chloroéthyle ou β-sulfatoéthyle,
et
m vaut 2 ou 3.

10. Colorant réactif selon la revendication 9, qui correspond à la formule (1a) 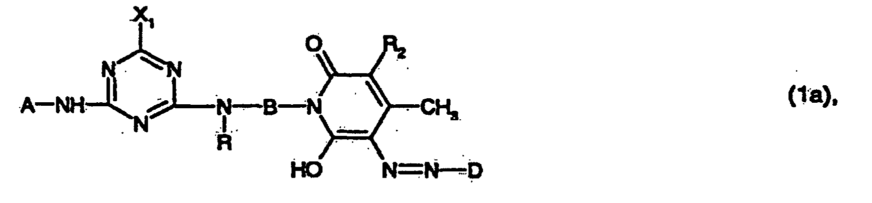 où
A représente un groupe phényle qui est substitué par 1 à 2 substituants identiques ou différents pris dans le groupe comprenant méthyle, méthoxy, sulfo et un groupe réactif sur la fibre de formule -SO₂-Y (2a) , où Y représente un groupe vinyle ou β-sulfatoéthyle,
B représente un groupe alkylène en C₂-C₆ linéaire ou ramifié,
D correspond à un radical de formules (7a), (7b), (7c), (7d) ou (7e), où (R₈)₀₋₂, Y, Y₁ et m possèdent les significations et les significations préférées données à la revendication 9,
R₂ représente un groupe carbamoyle ou sulfométhyle,
R correspond à un radical de formule (3a) 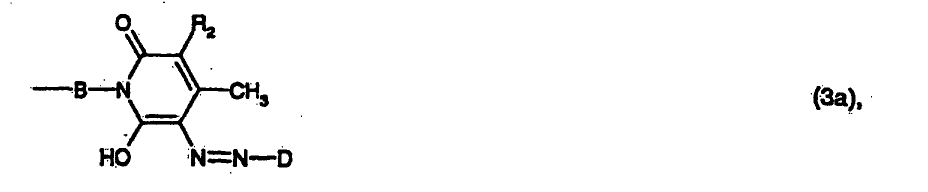 où B, D et R₂ possèdent les significations citées ci-dessus et
X₁ représente un groupe chloro ou bromo.

11. Procédé pour la préparation d'un colorant réactif selon la revendication 1, comprenant la réaction d'environ 1 équivalent molaire d'une amine de formule (8) 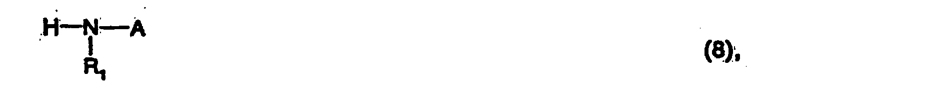 d'un composé de formule (9) 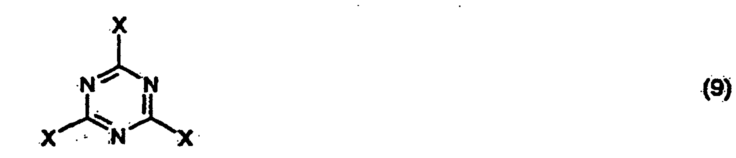 et d'un composé de formule (10) 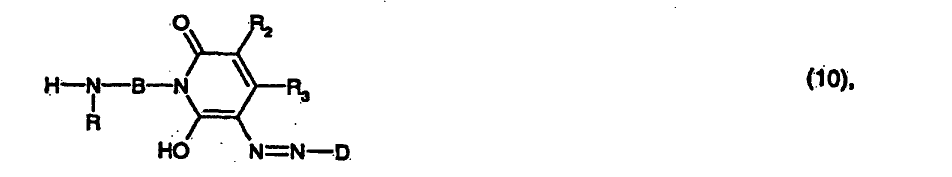 dans n'importe quel ordre, l'un sur l'autre, où A; B, D, R₁, R₂, R₃ et R possèdent les significations données à la revendication 1 et X est un groupe d'halogène.

12. Utilisation d'un colorant réactif selon l'une quelconque des revendications 1 à 10 ou des colorants réactifs obtenus selon la revendication 11 pour la teinture ou l'impression de matières fibreuses azotées ou présentant des groupes hydroxyle.

13. Utilisation selon la revendication 12, comprenant la teinture ou l'impression de matières fibreuses cellulosiques, de préférence de matières fibreuses contenant du coton.
